(19) Europäisches Patentamt
European Patent Office
Office européen des brevets

(11) **EP 1 536 147 B1**

(12) **EUROPÄISCHE PATENTSCHRIFT**

(45) Veröffentlichungstag und Bekanntmachung des Hinweises auf die Patenterteilung:
**08.12.2010 Patentblatt 2010/49**

(21) Anmeldenummer: **04024292.7**

(22) Anmeldetag: **12.10.2004**

(51) Int Cl.:
*F04D 29/68* (2006.01)      *F01D 5/14* (2006.01)
*F04D 27/02* (2006.01)

(54) **Strömungsarbeitsmaschine mit Fluidzufuhr zur Grenzschichtbeeinflussung**

Turbo compressor or pump with fluid injection to influence the boundary layer

Turbo compresseur ou pompe avec injection de fluide pour influencer la couche limite

(84) Benannte Vertragsstaaten:
**DE FR GB**

(30) Priorität: **26.11.2003 DE 10355241**

(43) Veröffentlichungstag der Anmeldung:
**01.06.2005 Patentblatt 2005/22**

(60) Teilanmeldung:
**10001422.4 / 2 182 172**
**10006367.6 / 2 226 509**
**10006368.4 / 2 226 510**
**10006370.0 / 2 228 542**
**10006371.8 / 2 226 511**

(73) Patentinhaber: **Rolls-Royce Deutschland Ltd & Co KG**
**15827 Dahlewitz (DE)**

(72) Erfinder: **Gümmer, Volker**
**15831 Mahlow (DE)**

(74) Vertreter: **Weber, Joachim**
**Hoefer & Partner**
**Patentanwälte**
**Pilgersheimer Strasse 20**
**81543 München (DE)**

(56) Entgegenhaltungen:
**EP-A- 0 754 864      EP-A- 1 118 747**
**EP-A- 1 382 855      CH-A- 275 562**
**DE-A1- 1 428 188      DE-A1- 2 458 709**
**DE-A1- 19 523 339      DE-C1- 4 438 184**
**GB-A- 479 427      GB-A- 792 343**
**GB-A- 1 043 168      GB-A- 1 163 328**
**GB-A- 2 058 222      JP-A- 6 207 558**
**US-A- 2 870 957      US-A- 5 480 284**

## Beschreibung

Die vorliegende Erfindung bezieht sich auf Strömungsarbeitsmaschinen wie etwa Bläser, Verdichter, Pumpen und Ventilatoren, sowohl in axialer, halbaxialer als auch in radialer Bauart. Das Arbeitsmedium oder Fluid kann gasförmig oder flüssig sein.

Im Einzelnen betrifft die Erfindung eine Strömungsarbeitsmaschine mit zumindest einem Rotor, wobei der Rotor mehrere an einer rotierenden Welle befestigte Rotorschaufeln umfasst. Es kann mindestens ein Stator existieren, wobei der Stator mit feststehenden Statorschaufeln versehen ist. Es muss ein Gehäuse existieren, welches die Durchströmung des Rotors und des Stators mit einem Fluid nach außen begrenzt.

Die aerodynamische Belastbarkeit und die Effizienz von Strömungsarbeitsmaschinen, beispielsweise Bläsern, Verdichtern, Pumpen und Ventilatoren, wird durch das Wachstum und die Ablösung von Grenzschichten auf den Schaufeln sowie auf den Naben- und Gehäusewänden begrenzt. Der Stand der Technik hält für dieses fundamentale Problem nur bedingt Lösungen bereit. Es existieren zahlreiche Konzepte zur Fluidzufuhr an Turbinenschaufeln, doch sind diese nicht auf Strömungsarbeitsmaschinen übertragbar, da sie im wesentlichen der Oberflächenkühlung und nicht der Grenzschichtenergetisierung dienen. Aus Verdichtergitterexperimenten sind Konzepte bekannt, bei denen aus einer druckbeaufschlagten Kammer im Schaufelinnern Luft auf die Schaufelsaugseite ausgeblasen wird, um die zweidimensional beschaffene Profilgrenzschicht zu energetisieren. Verwandte Alternativlösungen sehen ein direktes Durchtreten des Fluides von der Schaufeldruckseite zur Schaufelsaugseite vor. Daneben existiert für Rotoren ein Konzept zur Luftzufuhr an Nabe und Gehäuse durch Schlitze, um die dortigen Wandgrenzschichten zu beeinflussen. Schließlich gibt es Veröffentlichungen von Forschungsinstitutionen, die Konzepte aufzeigen, bei denen Rotoren in Gehäusenähe aus einzelnen Düsen angeblasen werden, um die dortige Radialspaltströmung günstig zu beeinflussen. Der allgemeine Gedanke der Grenzschichtbeeinflussung durch Einblasung bzw. Fluidzufuhr ist somit im Stand der Technik enthalten, doch sind die bekannten Lösungen trivial und nur bedingt effektiv.

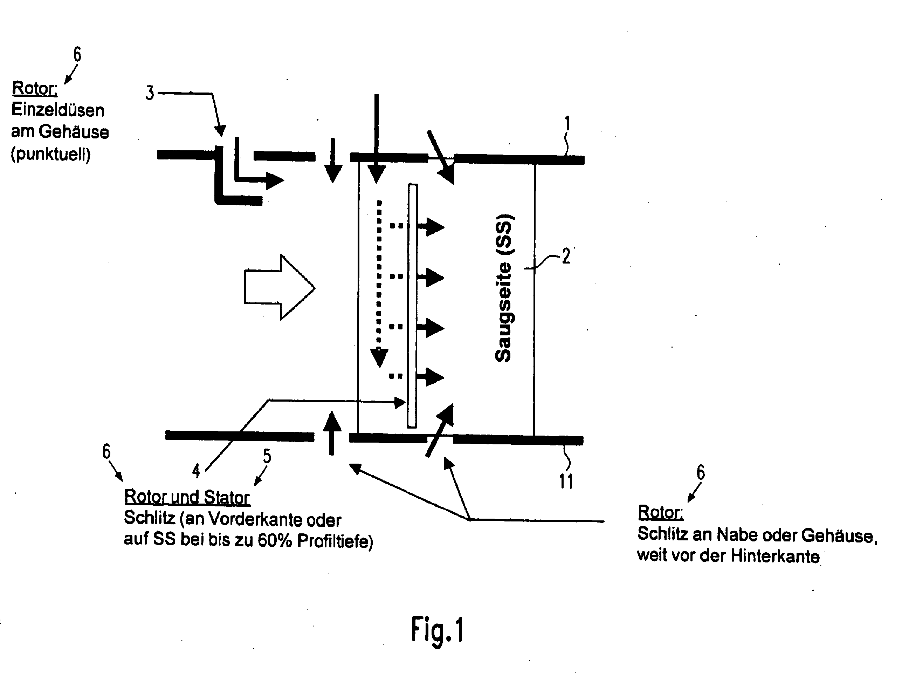

Die Fig.1 zeigt in schematischer Darstellung einige aus dem Stand der Technik bekannten Lösungen. Gezeigt sind in schematischer Darstellung eine Nabe 11 und ein Gehäuse 1, zwischen welchen ein Fluid, wie durch den großen Pfeil dargestellt, von links anströmt. Weiterhin ist eine Schaufel 2 dargestellt, die entweder ein Rotor 6 oder Stator 5 sein kann und deren sichtbarer Bereich die Saugseite bildet. Wie durch die Pfeile angedeutet ist, existieren Entwürfe für eine lokale Luftzufuhr an unterschiedlichen Stellen der Strömungsarbeitsmaschine. Für Rotor- und Statorbeschaufelungen sowie ebene Experimentalschaufelgitter ist es bekannt, zwischen der Vorderkante und etwa 60% der Profiltiefe über Schlitze 4 Fluid auf die Schaufelsaugseite einzublasen, um die zweidimensional beschaffene Profilgrenzschicht zu beeinflussen. Das dazu notwendige Fluid tritt dabei aus einem hohlen, druckbeaufschlagten Innenraum der Schaufel 2 in den Hauptströmungspfad ein. Bei alternativen Lösungen ist das Schaufelprofil geteilt, um die Versorgung durch ein direktes Durchtreten des Fluides von der Schaufeldruckseite zur Schaufelsaugseite zu ermöglichen.

Für den Fall eines Rotors ist es bekannt, vor oder innerhalb des Bereichs der vorderen 50% der Profiltiefe durch einen Schlitz 3 Fluid an der Nabe 11 und/oder am Gehäuse 1 zuzuführen, um eine Beeinflussung der Wandgrenzschichten zu erreichen. Für Rotoren mit Gehäuseradialspalt existieren zudem Konzepte, die vorsehen, durch eine Anzahl von in den Strömungspfad vorstehenden Düsen 3 am Gehäuse Fluid punktuell einzublasen, um an diskreten Orten des Umfangs auf die Spaltströmung des Rotors Einfluss zu nehmen.

Lediglich eine hier nicht dargestellte Lösung sieht eine Entnahme auf der Schaufelsaugseite und ein Wiedereinströmen an anderer Stelle derselben Schaufel, nämlich der Schaufelspitze vor.

Der Stand der Technik beschreibt somit die folgenden Methoden einer Zufuhr von Fluid:

1.) durch gerade Schlitze im vorderen oder mittleren Bereich der Schaufelsaugseite an Rotoren und Statoren

2.) durch flächenbündige Schlitze in Nabe und/oder Gehäuse weit vor der Schaufelhinterkante an Rotoren mit Gehäuseradialspalt

3.) durch eine Anzahl am Umfang verteilter, vorstehender Einzeldüsen am Gehäuse vor Rotoren mit Gehäuseradialspalt.

Die meisten dieser Konzepte sind nur bedingt auf strömungstechnisch besonders problematische Zonen innerhalb der Schaufelpassage ausgerichtet oder orientieren sich an der einfachen Vorstellung einer zweidimensionalen Profilumströmung ohne die Berücksichtigung der komplizierten dreidimensionalen Strömungsvorgänge im Seitenwandbereich (nahe an Nabe und Gehäuse). Andere sind trotz ihrer Ausrichtung auf lokal kritische Strömungszonen von begrenzter Wirksamkeit.

Üblicherweise wird beim Stand der Technik Hilfsluft höheren Druckes von extern zugeführt. Ein Patent sieht eine Luftversorgung von Schlitzen einer weiter stromab gelegenen Stelle der Strömungsarbeitsmaschine vor.

Der oben beschriebene Stand der Technik ist schriftlich in nachfolgenden Veröffentlichungen dokumentiert:

US 5,690,473 (Turbine blade having transpiration strip cooling and method of manufacture)

US 6,334,753 (Streamlined bodies with counter-flow fluid injection)

US 2,870,957 (Compressors)

US 2,933,238 (Axial flow compressors incorporating boundary layer control)

US 5,480,284 (Self bleeding rotor blade)

Aus der US-A-2 870 957 ist es bekannt, aus dem Innenraum einer Schaufel an den seitlichen Schaufelvorderkanten Fluid auszuleiten. Die Druckschrift zeigt somit einen Verdichter mit hohlen Schaufeln, aus denen Luft ausgeblasen wird. Die Luft wird über eine Leitungsverbindung von einem weiter stromab im Verdichter positionierten Ort herangeführt.

Die GB 792 343 A beschreibt die Zufuhr von Fluid durch Ausnehmungen der Hauptströmungspfadberandung an nicht mit Schaufeln versehenen Bereichen. Im Einzelnen zeigt die Druckschrift einen Verdichter mit Mitteln zu Zufuhr von Fluid am Gehäuse im Bereich eines Rotors, und zwar mit einer Richtung radial nach innen und einer Komponente stromauf gegen die Hauptströmung, wobei die Fluidzufuhrmittel entlang des Umfangs im Gehäuse in einer Region stromauf der Austrittsebene des Rotors angeordnet sind. Die Ausführungsbeispiele zeigen eine Reihe von Löchern oder einen Umfangsschlitz.

Aus der EP-A-1 118 747 ist es bekannt, Fluid von der Druckseite einer Schaufel durch eine in der Schaufel vorgesehene Ausnehmung zur Saugseite durchzuführen. Die Fluiddurchführung erfolgt vorzugsweise in einem flachen Winkel, in Richtung der Hinterkante in die Saugseite mündend. Schlitze oder Öffnungsreihen verlaufen dabei im Wesentlichen in radialer Richtung.

Die GB-A-1 163 328 zeigt unterschiedliche Varianten, um Fluid zur Saugseite einer Schaufel auszuleiten. Im Einzelnen beschreibt die Druckschrift eine Turbomaschine mit Rotorschaufeln, innerhalb derer längliche Löcher bzw. Kanäle verlaufen. Diese Löcher oder Kanäle verbinden eine radial innen liegende Öffnung mit einer radial weiter außen liegenden Öffnung auf einer der Schaufelseiten, nämlich der Druck- oder Saugseite, so dass Fluid der Fliehkraft folgend an einer inneren Öffnung aufgenommen und an der äußeren Öffnung wieder auf die Schaufeloberfläche oder auch die laufspaltzugewandte Schaufelspitzenfläche entlassen wird.

Die DE 14 28 188 A1 beschreibt ebenfalls sehr allgemein die Durchleitung von Fluid durch Ausnehmungen von Schaufeln. Dabei sind hohle Schaufeln an Rotor und/oder Stator mit Fluidauslässen an der Hinterkante zur Auffüllung der Profilnachlaufwelle und zur Reduzierung des dadurch erzeugten Lärms beschrieben.

Die EP-A-1 382 855 beschreibt eine Strömungsarbeitsmaschine mit Bifunktionalität, nämlich gleichzeitiger Anwendung von Fluidzufuhr und Fluidentnahme an einer Schaufelreihe, sowohl an einer Oberfläche des Ringkanals als auch am Schaufelprofil. Weitere für die vorliegende Erfindung relevante Dokumente sind GB 479 427 A, EP 0 754 864 A , DE 2 458 709 A1, GB 2 058 222 A, JP 06 207 558 A, GB 1 043 168 A, DE 19 523 339 A1, DE 4 438 184 C1.

Als nachteilig erweist sich beim Stand der Technik, dass die existierenden Lösungen keine hochwirksamen und insbesondere hinsichtlich des Wirkungsgrades der Strömungsarbeitsmaschine günstigen Lösungen bilden. Vielmehr sind die existierenden Einblasekonzepte vergleichsweise primitiv und sehen entweder die alleinige Einblasung auf der Schaufelsaugseite vor oder kombinieren dies mit einer Einblasung vor oder in der Schaufelreihe durch Ringschlitze an Nabe und/oder Gehäuse. Offensichtlich fehlen Konzepte zur gezielten Strömungsbeeinflussung im randnahen Bereich Eine gezielte Beeinflussung der dreidimensionalen Strömungsvorgänge im Bereich der Schaufelenden (und des damit verbundenen Strömungsaustausches

in Schaufelhöhenrichtung) wird durch existierende Konzepte nicht ausreichend berücksichtigt.

Der vorliegenden Erfindung liegt die Aufgabe zugrunde, eine Strömungsarbeitsmaschine der eingangs genannten Art zu schaffen, welche unter Vermeidung Nachteile des Standes der Technik eine sehr wirkungsvolle Grenzschichtbeeinflussung durch gezielte Fluidzufuhr sowie einen hohen Wirkungsgrad aufweist.

Erfindungsgemäß wird die Aufgabe durch die Merkmalskombinationen des unabhängigen Anspruchs gelöst, die jeweiligen Unteransprüche zeigen weitere vorteilhafte Ausgestaltungen der Erfindung.

Die erfindungsgemäße Strömungsarbeitsmaschine kann eine oder mehrere Stufen mit jeweils einem Rotor und einem Stator umfassen; in Einzelfällen wird die Stufe lediglich durch einen Rotor gebildet.

Erfindungsgemäß besteht der Rotor aus einer Anzahl von Schaufeln, die mit der rotierenden Welle der Strömungsarbeitsmaschine verbunden sind und Energie an das Arbeitsmedium abgeben. Der Rotor ist ohne Deckband am äußeren Schaufelende ausgeführt. Der Stator besteht aus einer Anzahl feststehender Schaufeln, die nabenseitig wie gehäuseseitig mit festem oder freiem Schaufelende ausgeführt sein können.

Die erfindungsgemäß vorgesehene Rotortrommel und die Beschaufelung sind von einem Gehäuse umgeben.

Die Strömungsarbeitsmaschine kann einen Stator vor dem ersten Rotor aufweisen, ein sogenanntes Vorleitrad. mindestens ein Stator oder Vorleitrad kann abweichend von der unbeweglichen Fixierung auch drehbar gelagert sein, um den Anströmwinkel zu verändern. Eine Verstellung erfolgt beispielsweise durch eine von außerhalb des Ringkanals zugängliche Spindel.

In besonderer Ausgestaltung kann die Strömungsarbeitsmaschine mindestens eine Reihe verstellbarer Rotoren aufweisen.

In einer alternativen Ausgestaltung der erfindungsgemäßen Strömungsarbeitsmaschine kann auch vorgesehen sein, dass diese bei Mehrstufigkeit zwei gegenläufige Wellen besitzt, so dass die Rotorschaufelreihen von Stufe zu Stufe die Drehrichtung wechseln. Hierbei existieren keine Statoren zwischen aufeinander folgenden Rotoren.

Die Strömungsarbeitsmaschine kann alternativ auch eine Nebenstromkonfiguration derart aufweisen, daß sich der einstromige Ringkanal hinter einer bestimmten Schaufelreihe in zwei konzentrische Ringkanäle aufteilt, die ihrerseits mindestens jeweils eine weitere Schaufelreihe umfassen.

Erfindungsgemäß ist somit im Einzelnen eine Strömungsarbeitsmaschine geschaffen worden, die Mittel zur Zufuhr von Fluid an mindestens einer Schaufel einer Schaufelreihe des Rotors an aerodynamisch kritischen Orten auf hinterkanten- und randnahen Oberflächen (HRO) umfaßt.

Die Erfindung betrifft eine spezielle Form der HRO von TypD.

Im Folgenden werden Beispiele von Fluidzufuhrvorrichtungen mit den Figuren beschrieben, wobei die Erfindung lediglich die Figuren 31-34 betrifft. Dabei zeigt:

Fig.1: eine schematische Darstellung des Standes der Technik

Fig.2: eine schematische Darstellung von Varianten des Grundkonzeptes

Fig.3: eine weitere schematische Darstellung von Vari- anten des Grundkonzeptes

Fig.4: verschiedene Varianten und Konfigurationen der erfindungsgemäßen Strömungsarbeitsmaschine

Fig.5: eine Darstellung zur Definiti- on des Begriffs HRO

Fig.6: eine Darstellung zur Definiti- on von HRO, Typen A und B

Fig.7: eine Darstellung zur Definiti- on von HRO, Typen C, D und E

Fig.8: eine weitere Darstellung zur Definition von HRO, Typen C, D und E

Fig.9 bis 11: unterschiedliche Ausgestaltungsformen von Kam- mern zur Zuführung des Fluids, vornehmlich vom Gehäuse aus

Fig.12 bis 14: Ausgestaltungsvarianten analog Fig.9 bis 11 mit Kammern zur Zuführung des Fluids, vornehmlich von der Nabe aus

Fig.15 bis 19: Ausführungsvarianten einer Flu- idzufuhrvorrichtung an Hinterkanten- und Randna- hen Oberflächen (HRO) des Typs A

Fig.20 bis 22: Ausführungsvarianten einer Flu- idzufuhrvorrichtung an Hinterkanten- und Randna- hen Oberflächen (HRO) des Typs B

Fig.23 bis 26: Ausführungsvarianten einer Flu- idzufuhrvorrichtung an Hinterkanten- und Randna- hen Oberflächen (HRO) des Typs C

Fig.27 bis 34 : Ausführungsvarianten einer Flu- idzufuhrvorrichtung an Hinterkanten- und Randna- hen Oberflächen (HRO) des Typs D

Fig.35 bis 40: Ausführungsvarianten einer Flu- idzufuhrvorrichtung an Hinterkanten- und Randna- hen Oberflächen (HRO) des Typs E

Fig.41 bis 43: Vorrichtung zur saugseitigen, intensitätsvariablen Fluidzufuhr (SIFZ)

Fig. 44 und 45: unterschiedliche Ausgestaltungsformen von Kam- mern zur gleichzeitigen Abführung und Zuführung von Fluid an derselben Schaufelreihe (Bifunktio- nalität).

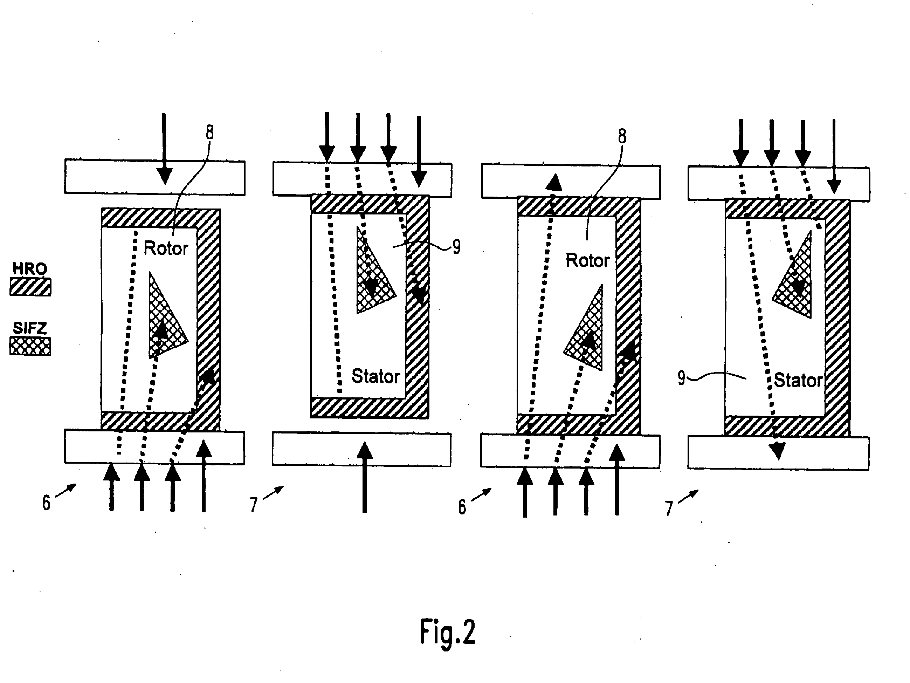

Die Fig. 2 zeigt in stark vereinfachter Darstellung vier unterschiedlich konfigurierten Schaufelreihen, welche jeweils einen Rotor 6 beziehungsweise einen Stator 7 umfassen, die mit Rotorschaufeln 8 beziehungsweise Statorschaufeln 9 versehen sind. Mit dem Bezugszeichen 1 wird in stark vereinfachter Darstellung ein Gehäuse oder ein außenliegendes Deckband wiedergegeben. Das Bezugszeichen 11 kennzeichnet eine Rotortrommel oder ein innenliegendes Deckband. Die gewählte Ansicht der Schaufel kann sowohl die Saugseite als auch die Druckseite der Schaufel repräsentieren. Auf Rotoren und Statoren ist eine Zone für saugseitige intensitätsvariable Fluidzufuhr (SIFZ) vorgesehen.

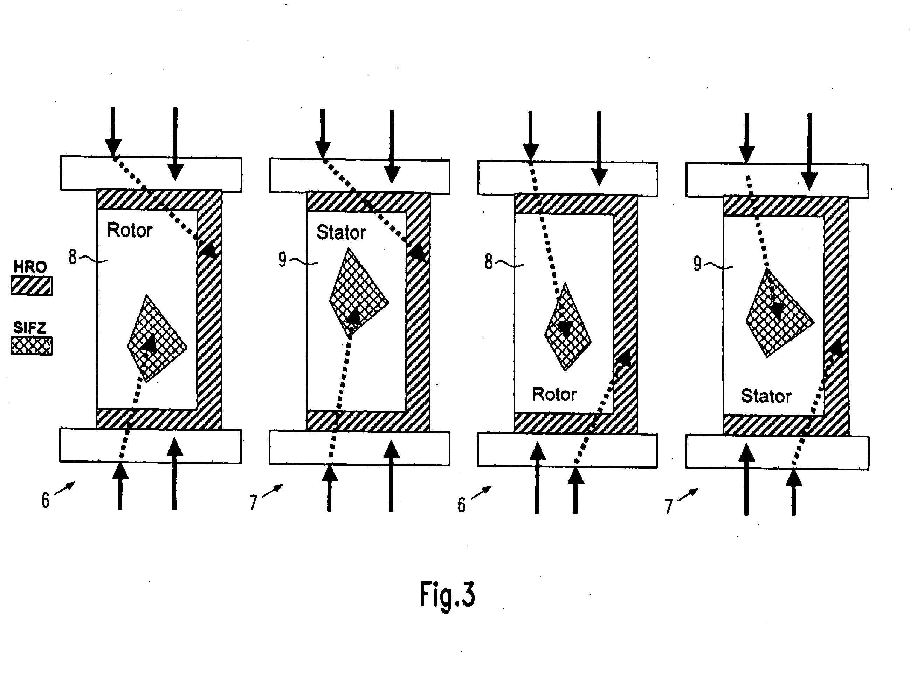

In analoger Weise zeigt Fig. 3 das Grundkonzept.

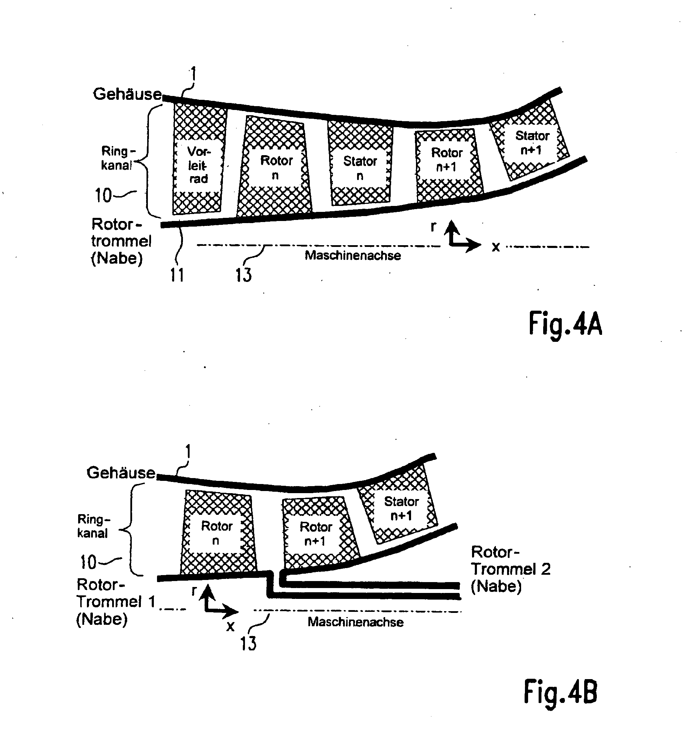

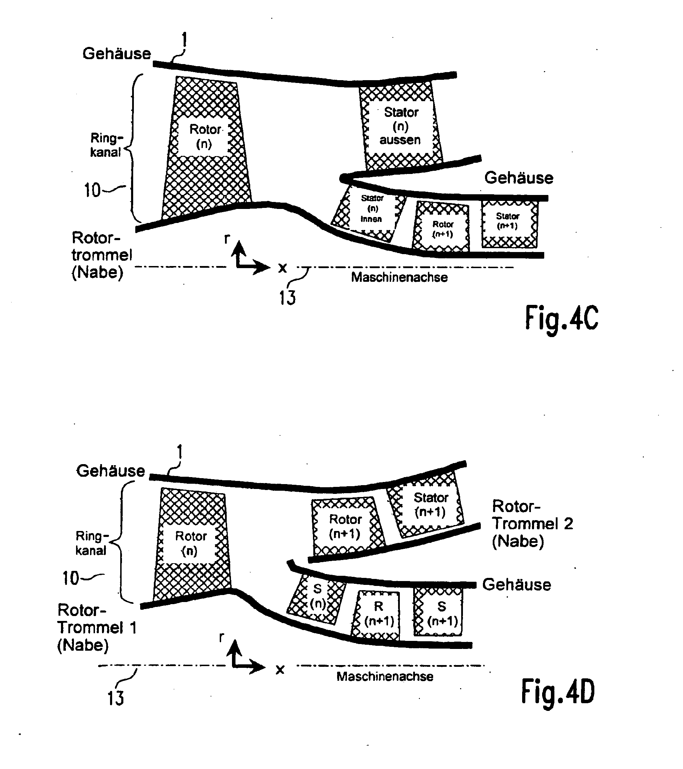

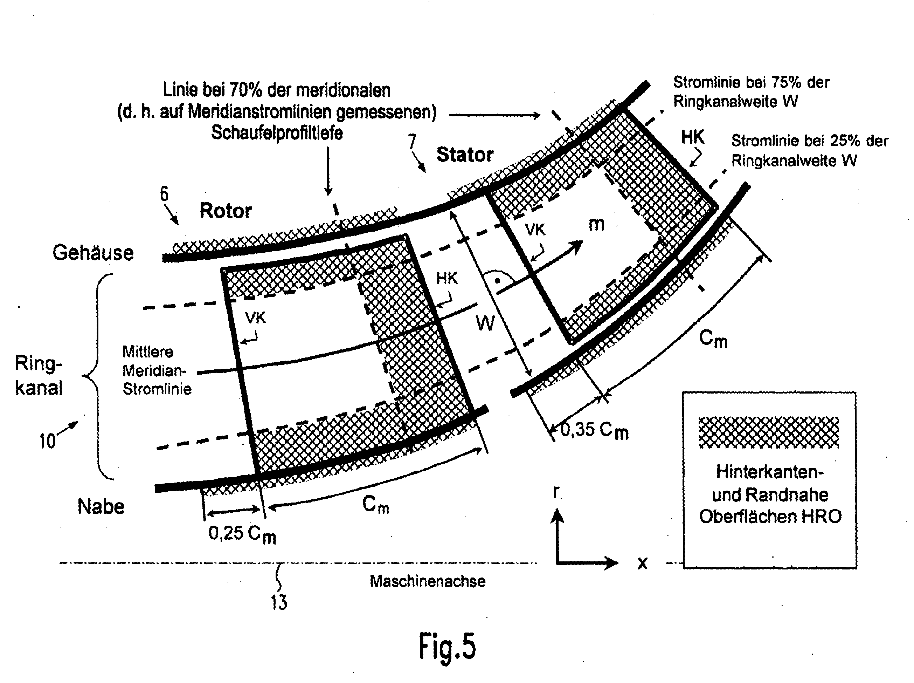

Die Fig. 4 zeigt vier verschiedene Konfigurationen einer Strömungsarbeitsmaschine. Dabei bezeichnet das Bezugszeichen 10 einen von links nach rechts zu durchströmenden Ringkanal, mit dem Bezugszeichen 13 ist die Maschinenachse dargestellt, um welche sich eine Rotortrommel (Nabe) 11 dreht. Bei den in Fig. 5B und 5D gezeigten Ausführungsbeispielen ist eine weitere Rotortrommel (Nabe) vorgesehen. Die Rotoren, Statoren sowie das Vorleitrad sind jeweils in Fig. 5 beschriftet, es ist jeweils in schematischer Weise eine Schaufel dargestellt.

Die Fig. 5 zeigt die Definition der Hinterkanten- und Randnahen Oberflächen (HRO). Es ist wiederum vereinfacht ein Rotor 6 sowie ein Stator 7 gezeigt, die im Ringkanal 10 zwischen einem Gehäuse 1 und einer Nabe (Rotortrommel) 11 angeordnet sind.

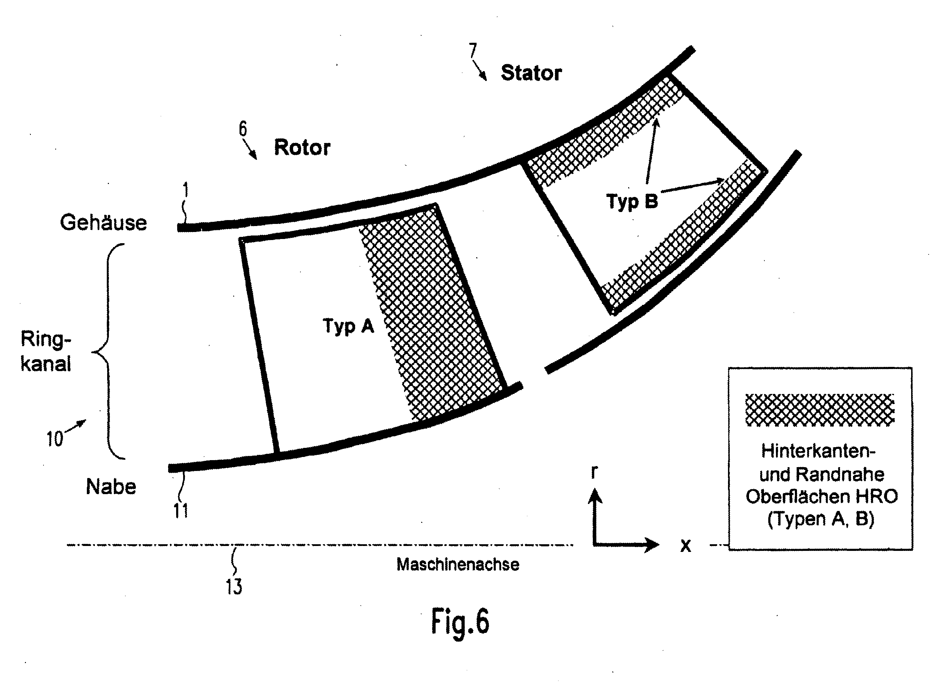

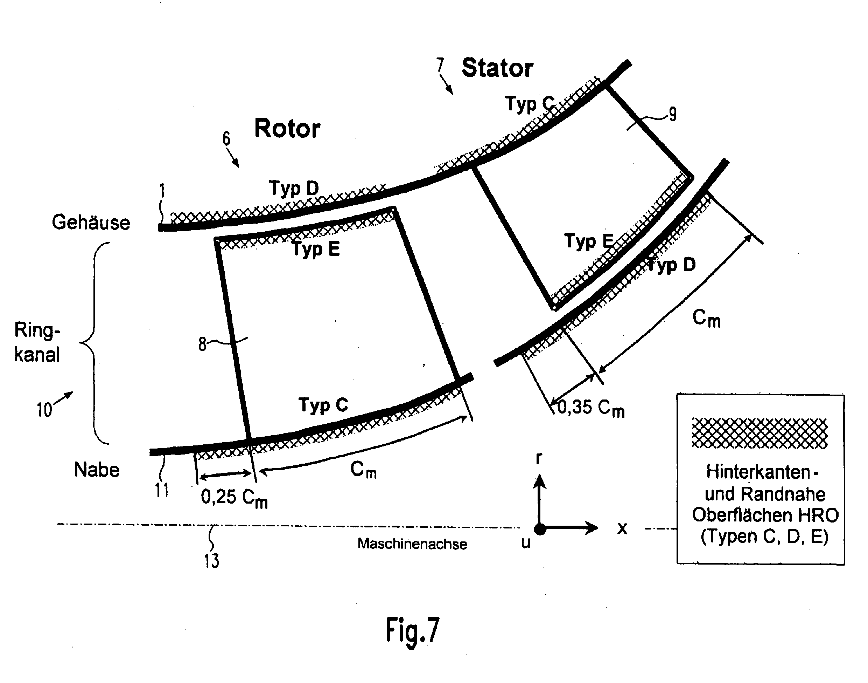

Wie die Darstellungen in Fig. 6 und 7 zeigen, ergeben sich fünf HRO-Typen:

HRO, Typ A: Die Oberflächen sind an der Schaufelsaug- oder Druckseite eines Rotors oder Stators ausgebildet, und zwar zwischen 70% und 100% der meridionalen Schaufelsehnenlänge Cm. O-berflächenabschnitte im zentralen Bereich der Hinterkante, deren Oberflächennormale einen Winkel von weniger als 60 Grad mit der mittleren Abströmrichtung bildet, sind dabei ausgeschlossen.

HRO, Typ B: Die Oberflächen sind an der Schaufelsaugseite, der Schaufeldruckseite, der Vorderkante oder der Hinterkante eines Rotors oder Stators ausgebildet, und zwar an der Nabe zwischen 0% und 25% der lokalen Ringkanalweite W und am Gehäuse zwischen 75% und 100% der lokalen Ringkanalweite W.

HRO, Typ C: Die Oberflächen sind an der Naben- oder Gehäusekontur des Ringkanals mit fester Verbindung zur Schaufel ausgebildet, wie sie im Fall von Plattformen, Deckbändern, Blisk- und Blingkonfigurationen auftreten, und zwar zwischen der Hinterkantenebene HK und einer Ebene, die sich 25% der meridionalen Schaufelsehnenlänge Cm vor der Vorderkante VK befindet.

HRO, Typ D: Die Oberflächen sind an Naben- und Gehäusekontur des Ringkanals 10 im Bereich freier Schaufelenden (oberhalb von Rotoren ohne Deckband oder unterhalb von Statoren ohne Deckband) zwischen der Hinterkantenebene HK und einer Ebene, die sich 35% der meridionalen Schaufelsehnenlänge Cm vor der Vorderkante VK befindet, ausgebildet.

HRO, Typ E: Die Oberflächen sind an Schaufeln an deren freien Schaufelenden ausgebildet, die der Naben- oder der Gehäusekontur des Ringkanals 10 zugewandt sind (Spitzenstirnflächen der Schaufel).

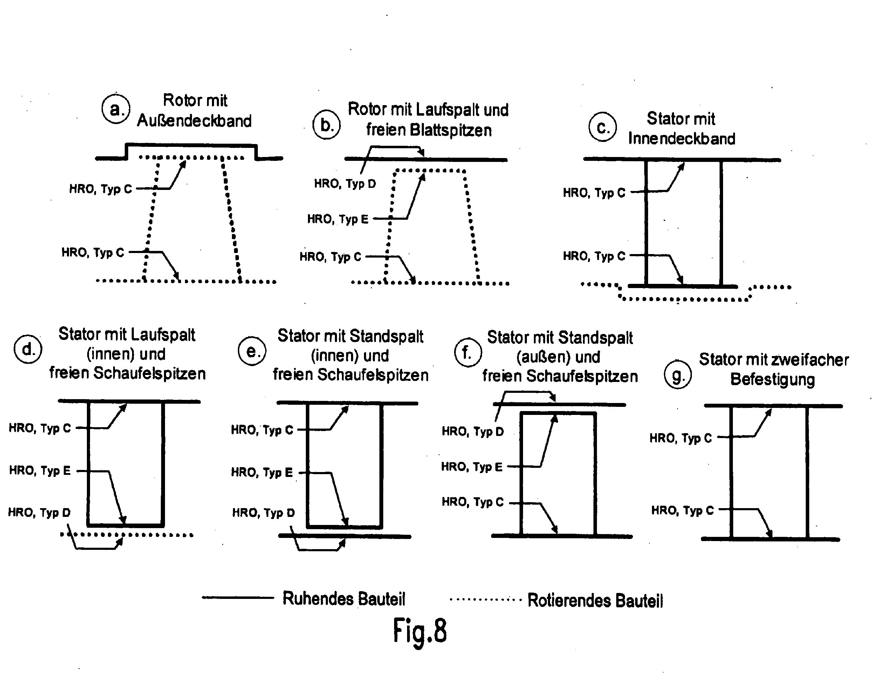

Die Fig. 8 zeigt unterschiedliche Ausführungen von Schaufelreihen der Strömungsarbeitsmaschine mit einer Kennzeichnung der wiederkehrenden Elemente HRO, Typ C, Typ D, Typ E. Im Einzelnen zeigen dabei die Beispiele Folgendes:

Die Fig. 8a zeigt eine Baugruppe, bestehend aus einer Rotortrommel, mit mehreren mit der Trommel rotierenden Rotorschaufeln, einem die Rotorschaufeln am äußeren Umfang umgebenden und mitrotierenden Deckband sowie einem die rotierenden Teile umgebenden und ruhenden Gehäuse.

Die Fig. 8b zeigt eine Variante mit einer Baugruppe, bestehend aus einer Rotortrommel, mehreren mit der Trommel rotierenden Rotorschaufeln mit freien äußeren Enden, sowie einem die rotierenden Teile umgebenden und ruhenden Gehäuse.

Die Fig. 8c zeigt eine Baugruppe, bestehend aus einem ruhenden Außengehäuse, mehreren mit dem Außengehäuse verbundenen Statorschaufeln, sowie einem von den Statorschaufeln am inneren Umfang getragenes Deckband und einer innerhalb der ruhenden Bauteile rotierenden Rotortrommel.

Die Fig. 8d zeigt eine Baugruppe, bestehend aus einem ruhenden Außengehäuse, mehreren mit dem Außengehäuse verbundenen Statorschaufeln mit freien inneren Enden und einer innerhalb der ruhenden Bauteile rotierenden Rotortrommel.

Aus Fig. 8e ist eine Baugruppe ersichtlich, welche aus einem ruhenden Außengehäuse, mehreren mit dem Außengehäuse verbundenen Statorschaufeln mit freien inneren Enden, und einem innerhalb der Statorschaufelreihe ruhenden Innengehäuse besteht.

Die Fig. 8f zeigt eine Baugruppe, bestehend aus einem ruhenden Innengehäuse, mehreren mit dem Innengehäuse verbundenen Statorschaufeln mit freien äußeren Enden, und einem die Statorschaufelreihe umgebenden Außengehäuse.

Die Fig. 8g verdeutlicht eine Baugruppe, welche aus einem ruhenden Innen- und Außengehäuse besteht, sowie mehreren mit dem Innen- und Außengehäuse verbundenen Statorschaufeln.

Die Führung des zuzuführenden Fluids erfolgt über Strömungswege an der Peripherie des Ringkanals 10 oder innerhalb von Schaufeln 8, 9 und ihrer umgebenden Bauteile. das Fluid wird dabei entweder bei freier Strömung oder aber mit Hilfe mindestens eines im Strömungsweg befindlichen Drosselorgans 12, das unverstellbar oder auch regelbar sein kann, in den Ringkanal im Bereich der betreffenden Schaufelreihe zugeführt. Die Zuführung des Fluids erfolgt entweder von einer Fremdquelle aus oder wird von Orten der Strömungsarbeitsmaschine oder der die Strömungsarbeitsmaschine einschließenden Gesamtanlage zurückgeführt.

Die notwendigen Elemente des Strömungsweges können als einfacher Hohlraum, als Ringraum, als Rohrleitung, als Kanal, als Düse oder als Diffusor beliebiger Querschnittsform ausgestaltet sein und werden im Folgenden unter dem Begriff "Kammer" zusammengefaßt.

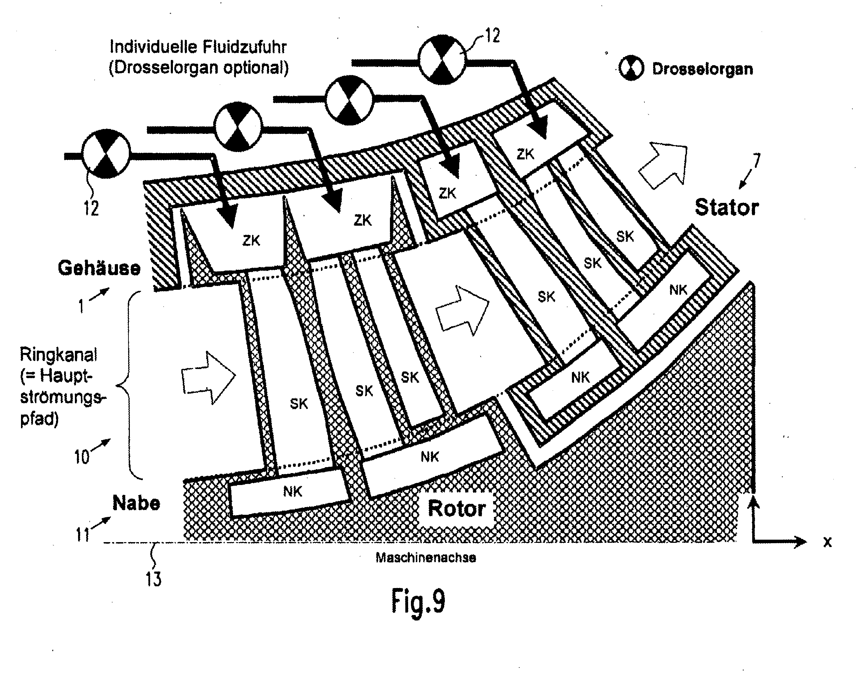

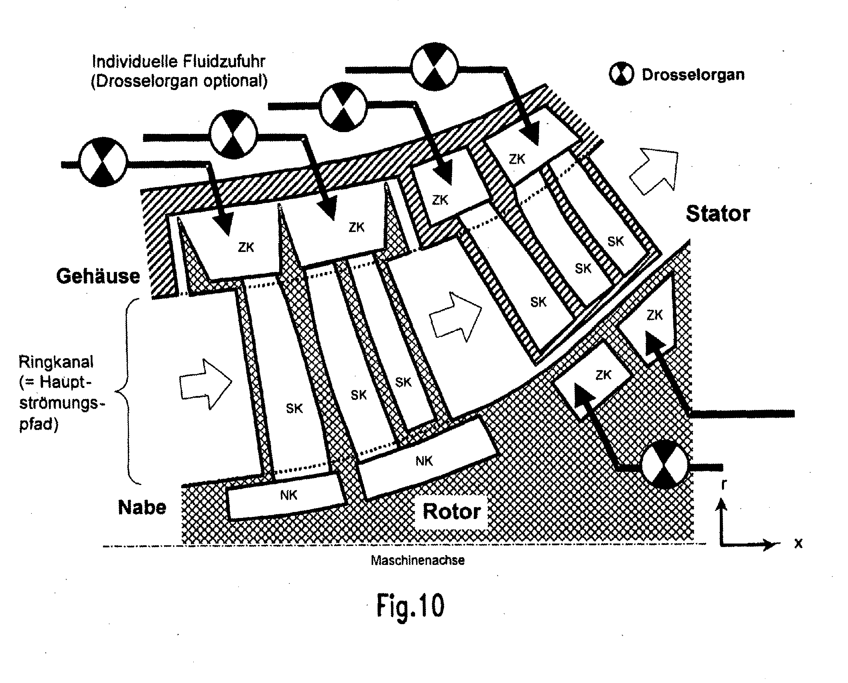

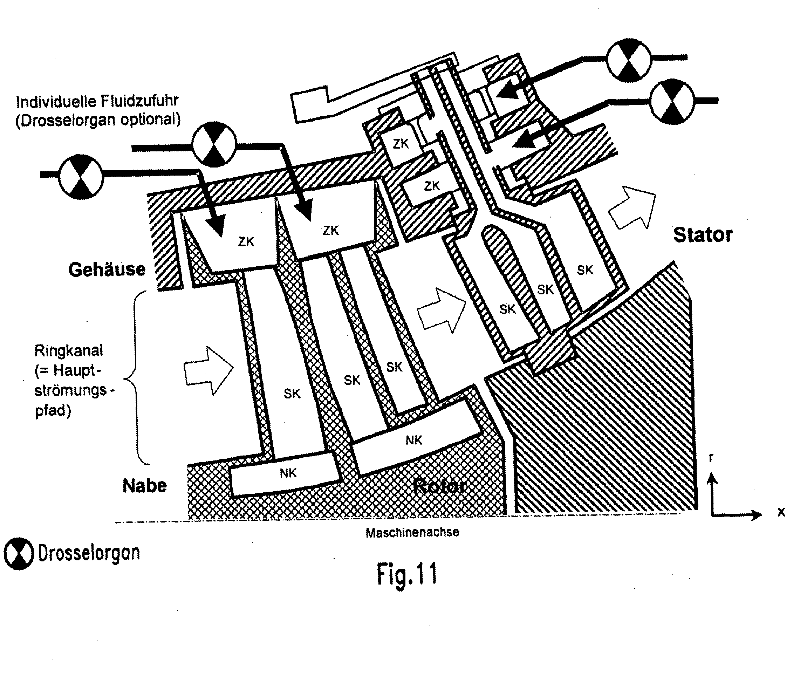

Die Fig. 9 bis 11 zeigen unterschiedliche Ausgestaltungsvarianten mit Konfigurationen, bei welchen Zufuhrkammern (ZK), Schaufelinnenkammern (SK) und Nabenkammern (NK) vorgesehen sind.

Im Einzelnen zeigen die Fig. 9 bis 11 Ausgestaltungsvarianten, bei welchen den einzelnen Schaufelreihen jeweils mindestens eine Kammer am oder im Gehäuse zugeordnet ist, durch die Fluid der Schaufelreihe zugeführt wird (Zufuhrkammer ZK). Für den Fall, dass mindestens eine weitere Kammer im Inneren mindestens einer Schaufel existiert, die sich über die Gesamtheit oder nur Teile der Schaufelhöhe erstreckt (Schaufelinnenkammer SK), kann jede Zufuhrkammer ZK mit mindestens einer Schaufelinnenkammer SK in Verbindung stehen und dieser Fluid zuführen. Besitzt die Schaufel eine feste Anbindung zur inneren Ringkanalkontur, so kann als letztes Kammerglied des zur Fluidzufuhr konzipierten Gesamtströmungsweges mindestens eine Kammer an oder in der Nabe außerhalb des Ringkanals existieren (Nabenkammer NK), die mit mindestens einer Schaufelinnenkammer SK in Verbindung steht und von dieser Fluid entgegen nimmt.

Besitzt die Schaufel ein freies Ende mit Radialspalt an der Nabe, oder weist die Schaufel keine über die gesamte Schaufelhöhe reichende Schaufelinnenkammer auf, kann zur Fluidzufuhr an der Nabe ebenfalls mindestens eine Zufuhrkammer ZK an oder in der Nabe außerhalb des Ringkanals existieren.

Zufuhrkammern und Nabenkammern erstrecken sich über die Gesamtheit oder Teile des Maschinenumfangs. Die Zufuhrkammern ZK dienen der Zuleitung des Fluids zur betreffenden Schaufelreihe, wobei die Schaufelinnenkammern SK Nabenkammern Hilfsmittel sind, um den Zugang zu den relevanten Hinterkanten- und Randnahen Oberflächen (HRO) der betreffenden Schaufelreihe herzustellen.

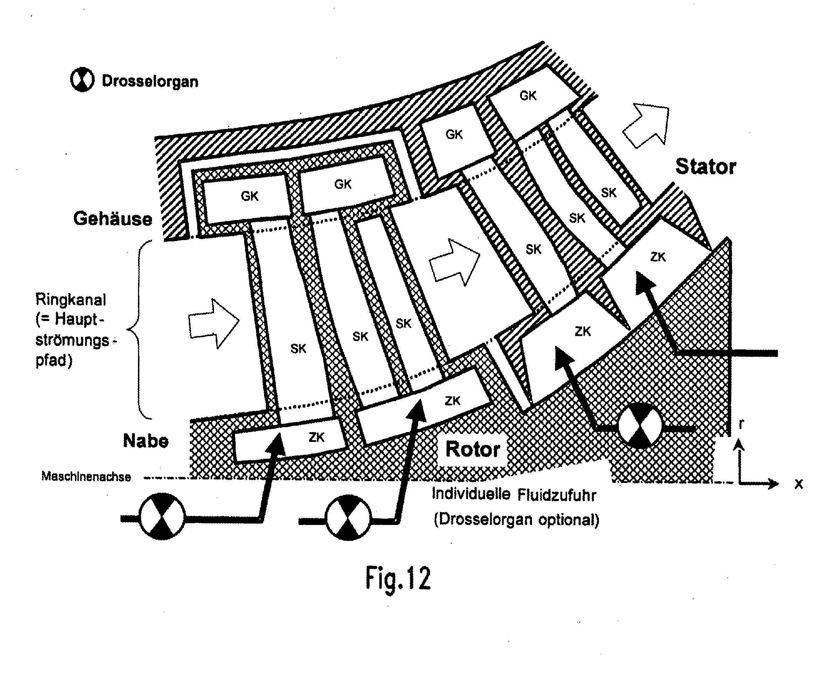

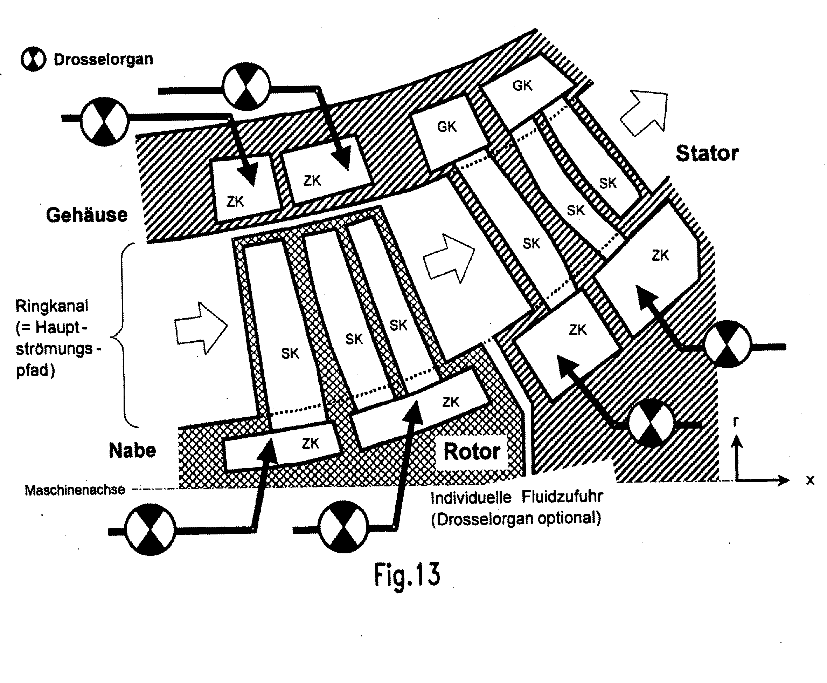

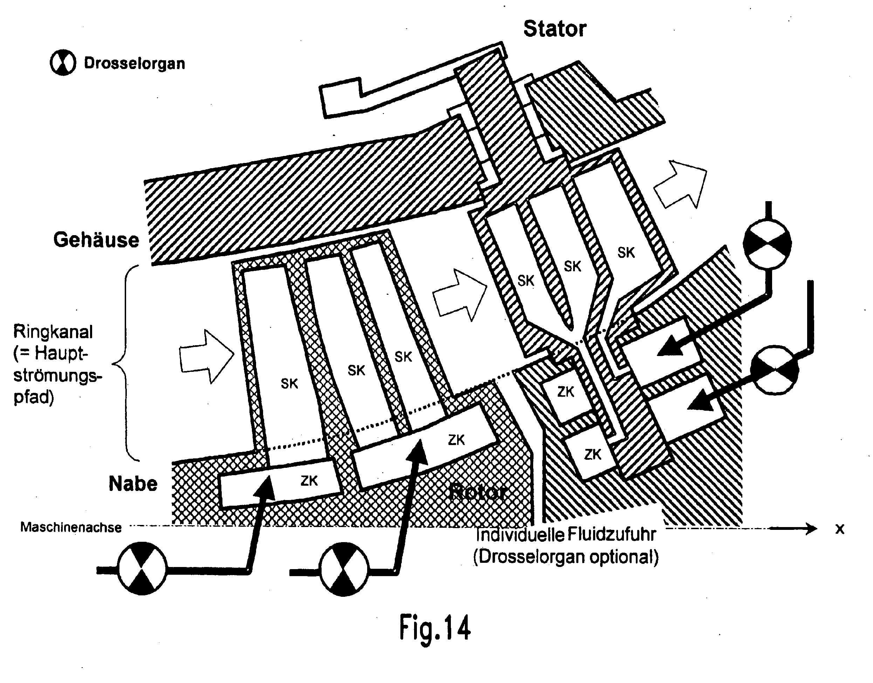

Während in den Fig. 9 bis 11 Ausgestaltungsformen gezeigt wurden, bei welchen mindestens eine Zufuhrkammer ZK am oder im Gehäuse angeordnet ist, zeigen die Fig. 12 bis 14 Ausgestaltungsformen, bei welchen mindestens eine Kammer an oder in der Nabe angeordnet ist, durch die Fluid der Schaufelreihe zugeführt wird (Zufuhrkammer ZK). Für den Fall, dass mindestens eine weitere Kammer im Innern mindestens einer Schaufel exisitiert, die sich über die Gesamtheit oder nur Teile der Schaufelhöhe erstreckt (Schaufelinnenkammer SK), kann jede Zufuhrkammer ZK mit mindestens einer Schaufelinnenkammer SK in Verbindung stehen und dieser Fluid zuführen. Besitzt die Schaufel eine feste Anbindung zur äußeren Ringkanalkontur, so kann als letztes Kammerglied des zur Fluidzufuhr konzipierten Gesamtströmungsweges mindestens eine Kammer am oder im Gehäuse existieren (Gehäusekammer GK), die mit mindestens einer Schaufelinnenkammer SK in Verbindung steht und von dort Fluid entgegen nimmt.

Besitzt die Schaufel ein freies Ende mit Radialspalt am Gehäuse oder weist die Schaufel keine über die gesamte Schaufelhöhe reichende Schaufelinnenkammer auf, kann zur Fluidzufuhr am Gehäuse ebenfalls mindestens eine Zufuhrkammer am oder im Gehäuse außerhalb des Ringkanals existieren.

Die Zufuhrkammern und Gehäusekammern erstrecken sich über die Gesamtheit oder nur Teile des Umfangs der Strömungsarbeitsmaschine. Die Zufuhrkammern dienen der Zuleitung des Fluids zu der betreffenden Schaufelreihe. Die Schaufelinnenkammern und die Gehäusekammern sind Hilfmittel, um den Zugang zu relevanten Hinterkanten- und Randnahen Oberflächen (HRO) im Bereich der betreffenden Schaufelreihe herzustellen.

Es ist vorgesehen, dass bei einer Schaufelreihe der im Zusammenhang mit den Fig. 9 bis 11 bzw. 12 bis 14 beschriebenen Ausgestaltungsformen an mindestens einer Hinterkanten- und Randnahen Oberfläche (HRO) an mindestens einer ihrer Schaufeln und/oder mindestens einem ihrer den Ringkanal begrenzenden Bauteile mindestens eine Fluidzufuhrvorrichtung angeordnet ist, die eine Verbindung zwischen der Hinterkanten- und Randnahen Oberflächen (HRO) und einer Zufuhrkammer ZK, einer Schaufelinnenkammer SK, einer Nabenkammer NK oder einer Gehäusekammer GK herstellt. Die konstruktive Ausführung der Fluidzufuhrvorrichtung erfolgt durch mechanische, chemische oder thermische Materialabtragsverfahren an dem die Hinterkanten- und Randnahen Oberfläche (HRO) bildenden Bauteil.

In einer alternativen Ausgestaltung erhält die Fluidzufuhrvorrichtung ihre Begrenzungen durch Kombination mindestens zweier vorbereiteter Einzelbauteile, die lose oder fest zusammengefügt werden.

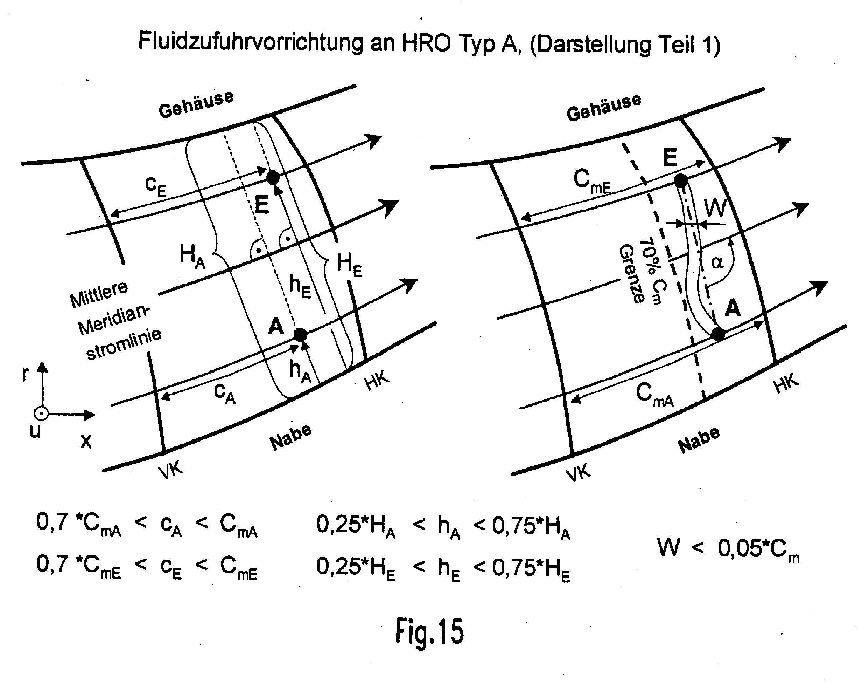

Die Fig. 15 bis 19 zeigen Beispiele für die Fluidzufuhrvorrichtung an Hinterkanten- und Randnahen Oberflächen (HRO) des Typs A. Dargestellt sind Konfigurationen von Schlitzen bzw. funktional ähnlichen Ersatzelementen auf einem eng begrenzten hinterkantennahen Abschnitt der Schaufeloberfläche, sowohl gültig für die Saugseite als auch die Druckseite der Schaufel. Einzelne Schlitze bzw. Ersatzelemente können unterschiedlichen Schaufelinnenkammern zugeordnet sein.

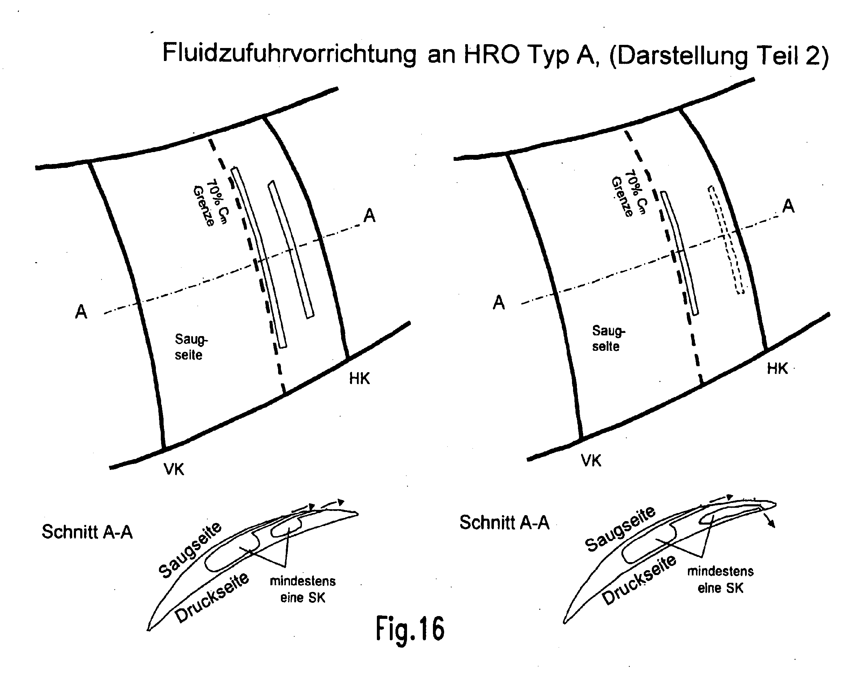

Betrachtet man die Schaufeloberfläche in dem aus Axialrichtung und Radialrichtung gebildeten Koordinatensystem $(x, r)$, siehe Fig. 15, so ergibt sich durch eine äquidistante Teilung der auf der mittleren Meridianstromlinie basierten Othogonalen eine Schar von Meridianstromlinien. Entlang der Meridianstromlinien durch den Anfangspunkt A und den Endpunkt E sind die meridionalen Lauflängen $c_A$ und $c_E$ zur Vorderkante (VK) sowie die meridionalen Sehnenlängen $C_{mA}$ und $C_{mE}$ zwischen Vorder- und Hinterkante (HK) festgelegt. Innerhalb des besonders relevanten, engen Bereiches zwischen der bei 70% der meridionalen Sehnenlänge gelegenen Grenzlinie und der Hinterkantenlinie befindet sich eine Konfiguration aus einem oder auch mehreren Schlitzen, die orthogonal zur Meridianrichtung unterschiedliche Erstreckung besitzen dürfen. Dies ist in Fig. 15 für den Fall eines einzelnen Schlitzes und in Fig. 16 für den Fall zweier Schlitze beispielhaft dargestellt. Jeder Schlitz ist definiert durch einen Anfangs- und Endpunkt, deren Lage wie folgt festgelegt ist:

$$0,7*C_{mA} < c_A < C_{mA}$$
$$0,7*C_{mE} < c_E < C_{mE}$$
$$0,25*H_A < h_A < 0,75\%H_A$$
$$0,25*H_E < h_E < 0,75\%H_E$$

Die Ringkanalhöhen $H_A$ und $H_E$, und ebenso die Nabenabstände $h_A$ und $h_E$ werden in einer Richtung senkrecht zur mittleren Meridianstomlinie gemessen.

Der Verlauf eines jeden Schlitzes zwischen Anfangs- und Endpunkt kann gerade oder auch gekrümmt beschaffen sein. Die Schlitze besitzten eine konstante oder eine in ihrer Längsrichtung veränderliche Weite W, die aber stets kleiner als 5% der meridionalen Sehnenlänge Cm bleibt (W < 0,05*Cm). Sie weisen eckige, angefaste oder gerundete Oberflächenkanten auf. Sie besitzen an Anfangs- und Endpunkt eine eckige Form oder einen runden (langlochähnlichen) Abschluss. Die Schlitze führen senkrecht oder schräg zur Schaufeloberfläche durch das Wandmaterial in dieselbe Schaufelinnenkammer oder auch unterschiedliche Schaufelinnenkammern.

Es ergibt sich eine strömungstechnisch besonders günstige Lösung, wenn Schlitze auf der Schaufelsaugseite innerhalb eines engen, wie folgt begrenzten Korridors angeordnet werden:

0,7*CmA < cA < 0,85*CmA
0,7*CmE < cE < 0,85*CmE

und dabei die Verbindungslinie zwischen Anfangspunkt A und Endpunkt E eines jeden Schlitzes mit der Meridianströmungsrichtung einen Winkel von 80° bis 110° einschließt (80 <= alpha <= 110). Es ist es ebenso besonders günstig, Schlitze auf der Schaufeldruckseite innerhalb eines engen, wie folgt begrenzten Korridors anzuordnen:

0,9*CmA < cA < CmA
0,9*CmE < cE < CmE.

und dabei die Verbindungslinie zwischen Anfangspunkt A und Endpunkt E eines jeden Schlitzes mit der Meridianströmungsrichtung einen Winkel von 80° bis 110° einschließt (80 <= alpha <= 110).

Es ergibt sich schließlich eine besonders günstige Beeinflussung der Schaufelumströmung, wenn Schlitze sowohl auf der Schaufelsaugseite als auch auf der Schaufeldruckseite angeordnet werden. Eine beispielhafte Darstellung für eine Konfiguration zweier Schlitze zeigt die Fig. 16, rechts.

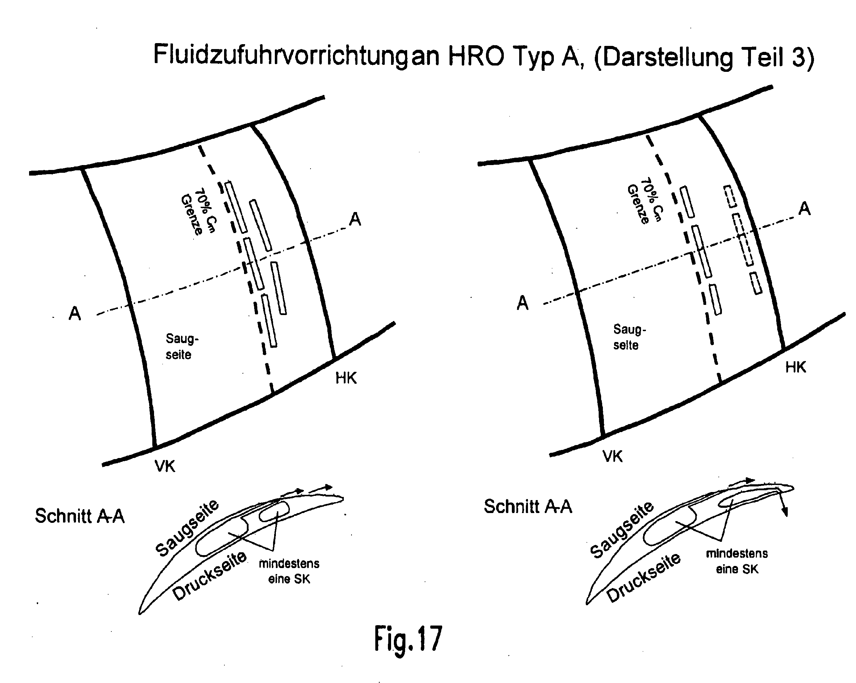

In einer abgewandelten Form tritt -bei gleichen Regeln hinsichtlich der Positionierung und des Verlaufes an der Schaufeloberfläche sowie der Beschaffenheit der Oberflächenkanten und Orientierung in der Schaufel- an die Stelle mindestens eines zwischen den Punkten A und E durchgängigen Schlitzes eine Reihe aus mehreren kurzen Schlitzen mit dazwischen befindlichen Lücken beziehungsweise Stegen. Dabei ist es insbesondere günstig, wenn im Falle der Verwendung von mehr als einer Reihe auf derselben Schaufelseite (Druck- oder Saugseite) Kurzschlitze und Stege bei Betrachtung entlang einer Meridianstromlinie abwechselnd auftreten, siehe Darstellungen in Fig. 17.

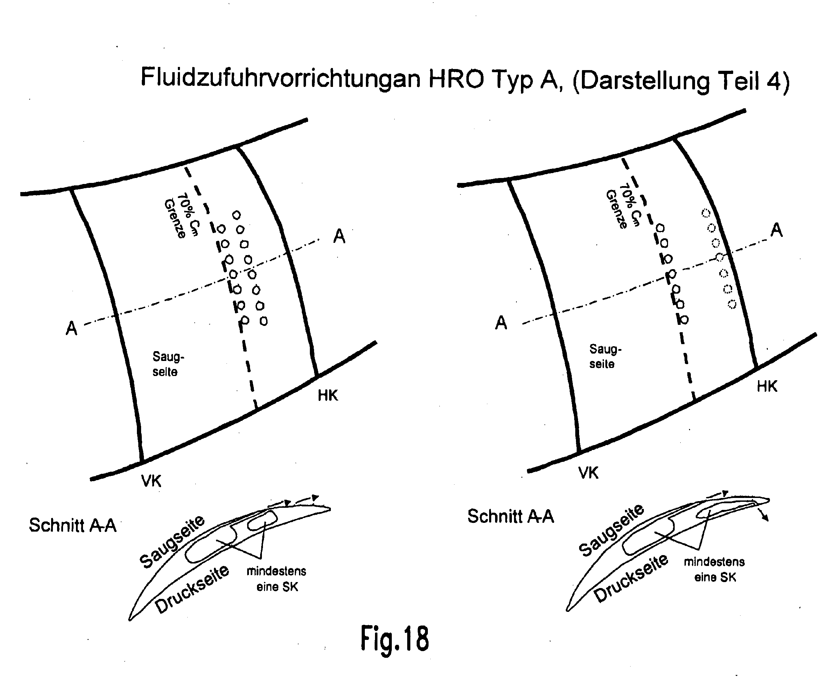

In einer anderen abgewandelten Form tritt -bei gleichen Regeln hinsichtlich der Positionierung und des Verlaufes an der Schaufeloberfläche sowie der Beschaffenheit der Oberflächenkanten und Orientierung in der Schaufel- an die Stelle mindestens eines zwischen den Punkten A und E durchgängigen Schlitzes eine Reihe aus mehreren Löchern. Dabei ist es insbesondere günstig, wenn im Falle der Verwendung von mehr als einer Reihe auf derselben Schaufelseite (Druck- oder Saugseite) Löcher und Lochzwischenräume bei Betrachtung entlang einer Meridianstromlinie abwechselnd auftreten, siehe Darstellungen in Fig. 18.

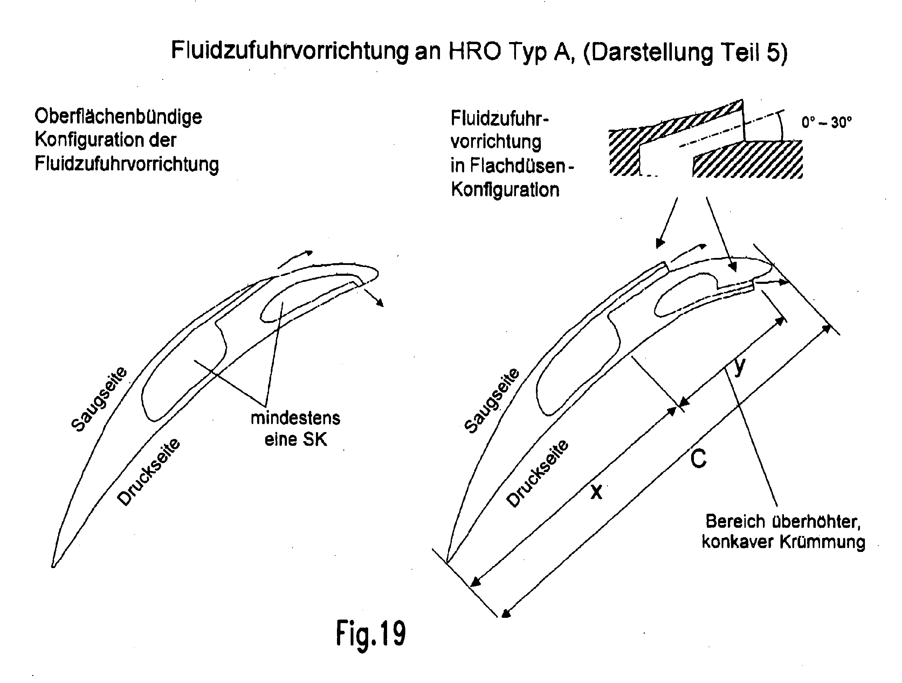

In einer anderen abgewandelten Form wird -bei gleichen Regeln hinsichtlich der Positionierung und des Verlaufes an der Schaufeloberfläche sowie der Beschaffenheit der Oberflächenkanten - mindestens eine Fluidzufuhrvorrichtung (Schlitz, Kurzschlitzreihe oder Lochreihe) als Flachdüse ausgeformt, wobei Fluid unter höchstens 30° zur Schaufeloberfläche zugeführt wird und die Schaufeloberfläche wie in Fig. 19 gezeigt, einen entsprechenden Absatz aufweist.

Eine besonders günstige Ausgestaltung ist durch das gemeinsame Auftreten der folgenden, ebenfalls in Fig. 19 dargestellten Ausgestaltungsmerkmale gegeben:

1.) eine Flachdüse zur Fluidzufuhr an einer Stelle der Schaufeldruckseite zwischen 85% der Profilsehnenlänge C und der Hinterkante 0,85 < (x+y)/C < 1.

2.) die Portionen x und y der Sehnenlänge stehen in einem Verhältnis von mindestens x/y = 1,5.

3.) die über die Strecke x erreichte Richtungswinkeländerung der Tangente an die Druckseitenoberfäche ist kleiner als die über die Strecke y erreichte Richtungswinkeländerung der Tangente an die Druckseitenoberfäche.

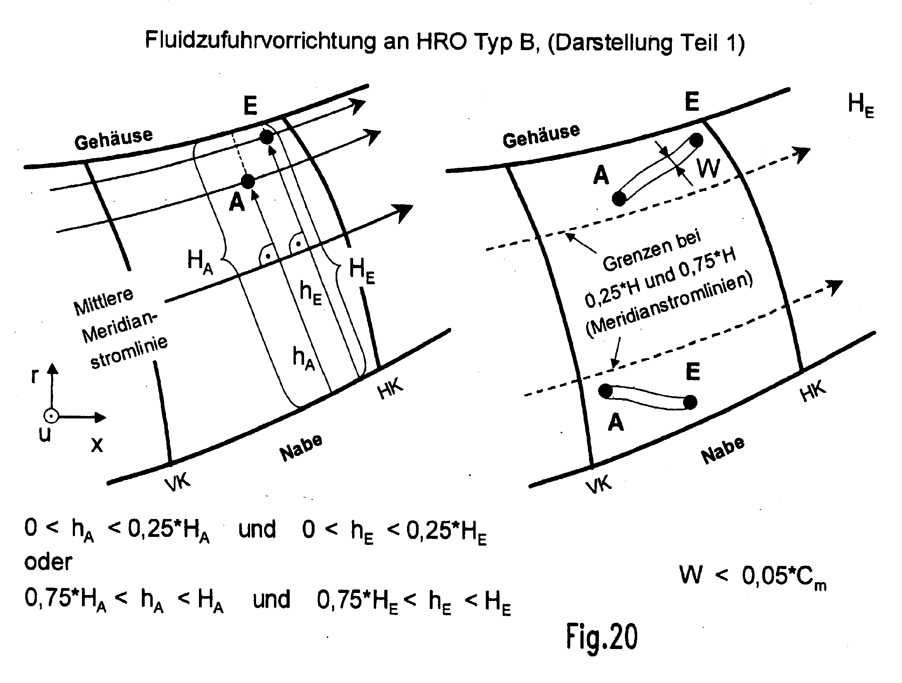

Die Fig. 20 bis 22 zeigen Beispiele für die Fluidzufuhrvorrichtung an Hinterkanten- und Randnahen Oberflächen (HRO) des Typs B. Dargestellt sind Konfigurationen von Schlitzen bzw. funktional ähnlichen Ersatelementen auf den zwei randnahen Abschnitten der Schaufeloberfläche, sowohl gültig für die Saugseite als auch die Druckseite der Schaufel. Einzelne Schlitze bzw. Ersatzelemente können unterschiedlichen Schaufelinnenkammern zugeordnet sein.

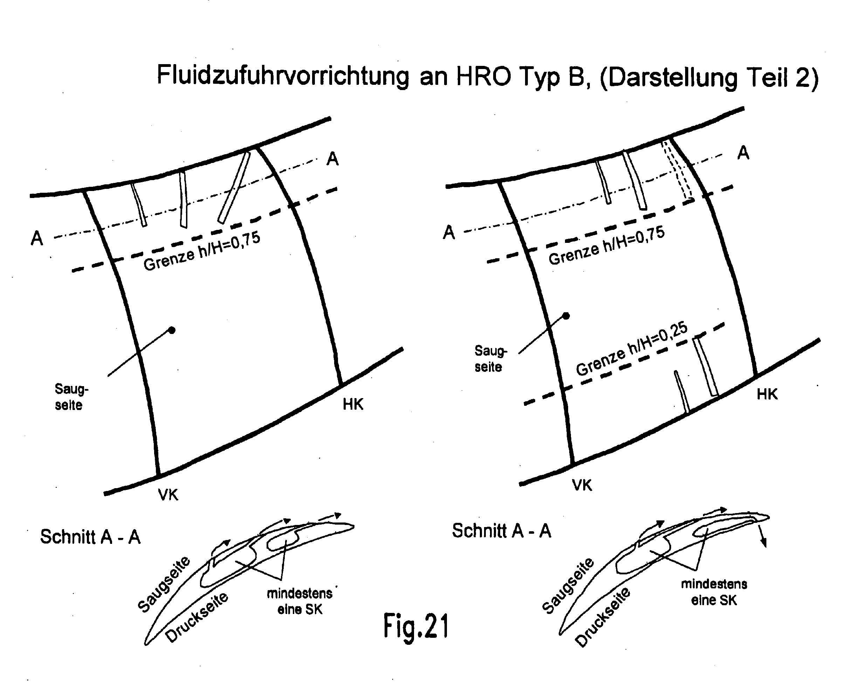

Betrachtet man die Schaufeloberfäche in dem aus Axialrichtung und Radialrichtung gebildeten Koordinatensystem (x, r), siehe Fig. 20, so ergibt sich durch eine äquidistante Teilung der auf der mittleren Meridianstromlinie basierten Othogonalen eine Schar von Meridianstromlinien. Die Meridianstromlinien auf den zwei Ringkanalhöhen h/H=0,25 und h/H=0,75 begrenzen die für HRO, Typ B vorgesehenen, eng entlang der Ringkanalwände verlaufenden Oberflächenzonen. Für die Fluidzufuhrvorrichtung sind Zonen zwischen der Nabe und der Grenzmeridianstromlinie bei h/H=0,25 beziehungsweise zwischen der Grenzmeridianstromlinie bei h/H=0,75 und dem Gehäuse vorgesehen. Jeder Schlitz der Fluidzufuhrvorrichtung verläuft zwischen einem Anfangspunkt A und einem Endpunkt E. Die Lage der Punkte A und E ist in meridionaler Richtung durch die Vorder- und Hinterkante der Schaufel eingeschränkt. Innerhalb dieser besonders relevanten, engen, randnahen Bereiche befindet sich eine Konfiguration aus einem oder auch mehreren Schlitzen, die orthogonal zur Meridianrichtung unterschiedliche Erstreckung besitzen dürfen. Dies ist in Fig. 20 für den Fall eines einzelnen Schlitzes und in Fig. 21 für den Fall dreier Schlitze beispielhaft dargestellt. Jeder Schlitz ist definiert durch einen Anfangs- und Endpunkt, deren Lage wie folgt festgelegt ist:

in Nabennähe durch $0 < hA < 0,25*HA$ und $0 < hE < 0,25*HE$ und/oder

in Gehäusenähe durch $0,75*HA < hA < HA$ und $0,75*HA < hA < HA$.

Die Ringkanalhöhen HA und HE, und ebenso die Nabenabstände hA und hE werden in einer Richtung senkrecht zur mittleren Meridianstomlinie gemessen.

Der Verlauf eines jeden Schlitzes zwischen Anfangs- und Endpunkt kann gerade oder auch gekrümmt beschaffen sein. Die Schlitze besitzten eine konstante oder eine in ihrer Längsrichtung veränderliche Weite W, die aber stets kleiner als 5% der meridionalen Sehnenlänge Cm bleibt ($W < 0,05*Cm$). Sie weisen eckige, angefaste oder gerundete Oberflächenkanten auf. Sie besitzen an Anfangs- und Endpunkt eine eckige Form oder einen runden (langlochähnlichen) Abschluss. Die Schlitze führen senkrecht oder schräg unter einem Winkel von mindestens 5° zur Schaufeloberfläche durch das Wandmaterial in dieselbe Schaufelinnenkammer oder auch unterschiedliche Schaufelinnenkammern

Es ergibt sich eine strömungstechnisch gesonders günstige Lösung, wenn Schlitze auf der Schaufelsaugseite innerhalb eines engen, wie folgt begrenzten Abschnittes angeordnet werden:

$0,5*CmA < cA < 0,85*CmA$
$0,5*CmE < cE < 0,85*CmE$

und dabei die Verbindungslinie zwischen Anfangspunkt A und Endpunkt. E eines jeden Schlitzes mit der Meridianströmungsrichtung einen Winkel von 80° bis 110° einschließt ($80 <= alpha <= 110$).

Es ist ebenso besonders günstig, Schlitze auf der Schaufeldruckseite innerhalb eines engen, wie folgt begrenzten Korridors anzuordnen:

$0,9*CmA < cA < CmA$
$0,9*CmE < cE < Cm$

und dabei die Verbindungslinie zwischen Anfangspunkt A und Endpunkt E eines jeden Schlitzes mit der Meridianströmungsrichtung einen Winkel von 80° bis 110° einschließt ($80 <= alpha <= 110$).

Es ergibt sich schließlich eine besonders günstige Beeinflussung der Schaufelumströmung, wenn Schlitze sowohl auf der Schaufelsaugseite als auch auf der Schaufeldruckseite angeordnet werden. Fig. 21 zeigt dies beispielhaft für eine Konfiguration von jeweils drei Schlitzen im Naben- und Gehäusebereich.

In einer abgewandelten Form tritt -bei gleichen Regeln hinsichtlich der Positionierung und des Verlaufes an der Schaufeloberfläche sowie der Beschaffenheit der Oberflächenkanten und Orientierung in der Schaufel- an die Stelle mindestens eines zwischen den Punkten A und E durchgängigen Schlitzes eine Reihe aus mehreren kurzen Schlitzen mit dazwischen befindlichen Lücken beziehungsweise Stegen. Dabei ist es insbesondere günstig, wenn im Falle der Verwendung von mehr als einer Reihe auf derselben Schaufelseite (Druck- oder Saugseite) Kurzschlitze und Stege bei Betrachtung entlang einer Meridianstromlinie abwechselnd auftreten.

In einer anderen abgewandelten Form tritt -bei gleichen Regeln hinsichtlich der Positionierung und des Verlaufes an der Schaufeloberfläche sowie der Beschaffenheit der Oberflächenkanten und Orientierung in der Schaufel- an die Stelle mindestens eines zwischen den Punkten A und E durchgängigen Schlitzes eine Reihe aus mehreren Löchern. Dabei ist es insbesondere günstig, wenn im Falle der Verwendung von mehr als einer Reihe auf derselben Schaufelseite (Druck- oder Saugseite) Löcher und Lochzwischenräume bei Betrachtung entlang einer Meridianstromlinie abwechselnd auftreten.

In einer anderen abgewandelten Form wird -bei gleichen Regeln hinsichtlich der Positionierung und des Verlaufes an der Schaufeloberfläche sowie der Beschaffenheit der Oberflächenkanten - mindestens eine Fluidzufuhrvorrichtung (Schlitz, Kurzschlitzreihe oder Lochreihe) als Flachdüse ausgeformt, wobei Fluid unter höchstens 30° zur Schaufeloberfläche zugeführt wird und die Schaufeloberfläche einen entsprechenden Absatz aufweist (Analog Fig. 19).

Eine besonders günstige Ausgestaltung ist durch das gemeinsame Auftreten der folgenden, ebenfalls in Fig. 19 dargestellten Ausgestaltungsmerkmale gegeben:

1.) eine Flachdüse zur Fluidzufuhr an einer Stelle der Schaufeldruckseite zwischen 85% der Profilsehnenlänge C und der Hinterkante, d.h. 0,85 < (x+y)/C < 1.

2.) die Portionen x und y der Sehnenlänge stehen in einem Verhältnis von mindestens x/y = 1,5.

3.) die über die Strecke x erreichte Richtungswinkeländerung der Tangente an die Druckseitenoberfäche ist kleiner als die über die Strecke y erreichte Richtungswinkeländerung der Tangente an die Druckseitenoberfäche.

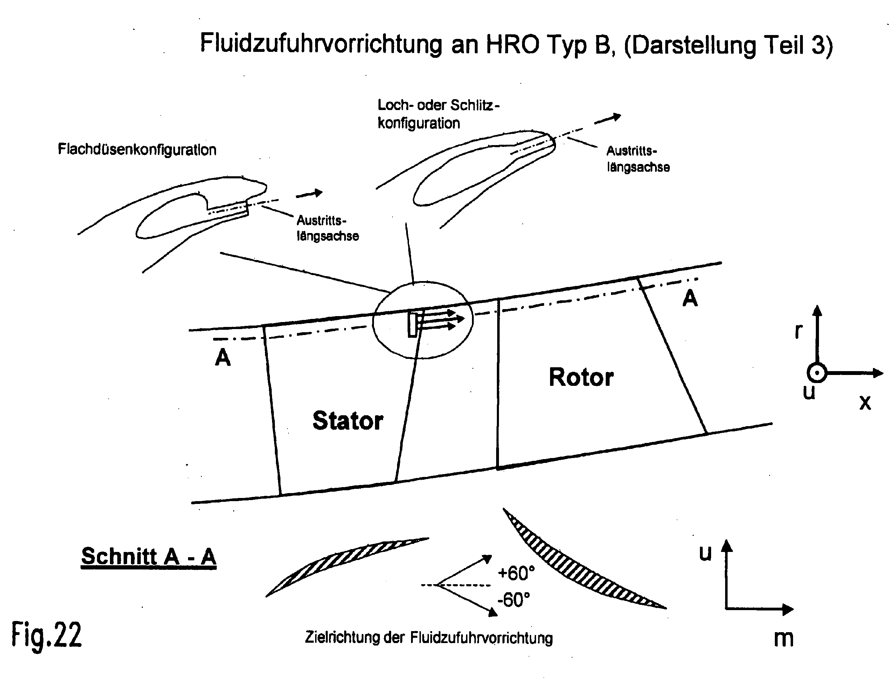

Schließlich kann im Falle einer Statorschaufel die Fluidzufuhrvorrichtung so beschaffen sein, dass durch den eingeleiteten Fluidstrahl eine Beeinflussung der gehäusenahen Strömung im nachfolgenden Rotor möglich ist, siehe Fig. 22. Die Fluidzufuhrvorrichtung (Loch, Schlitz oder Flachdüse) wird dazu in unmittelbarer Nähe der äußeren Ringkanalwand (des Gehäuse) als auch in unmittelbarer Nähe der Schaufelhinterkante angeordnet. Für den Schaufelhöhenbereich gilt die Einschränkung 0,9 < h/H < 1,0, für Ausdehnung in meridionaler Richtung gilt 0,9 < c/Cm < 1,0. Wie die Fig. 22 zeigt, schließt die Zielrichtung der Fluidzufuhrvorrichtung, die durch die Orientierung der Längsachse des in der Schaufelwandung ausgebildeten Fluidzufuhrweges an der Austrittsstelle gegeben ist, mit der Meridianrichtung m einen Winkel von -60° bis 60° ein.

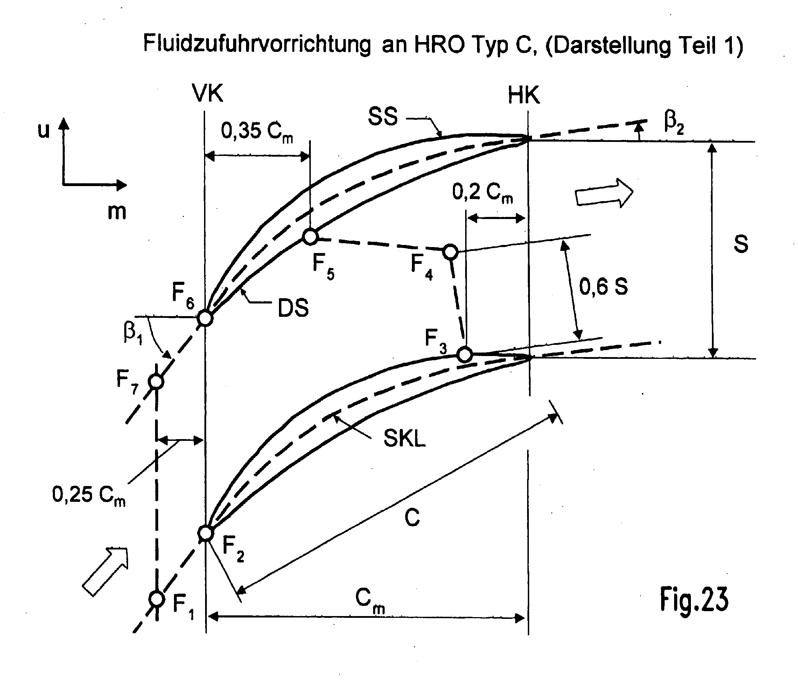

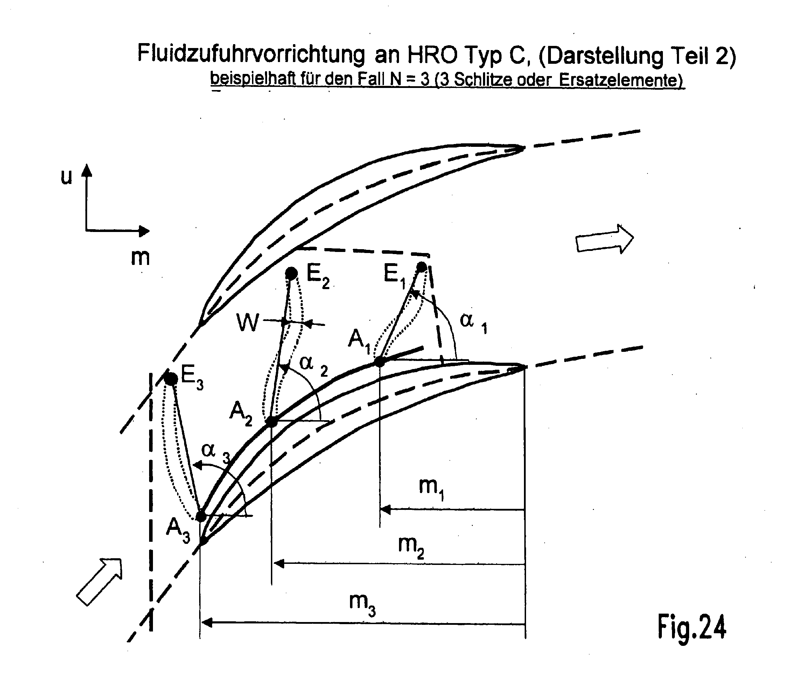

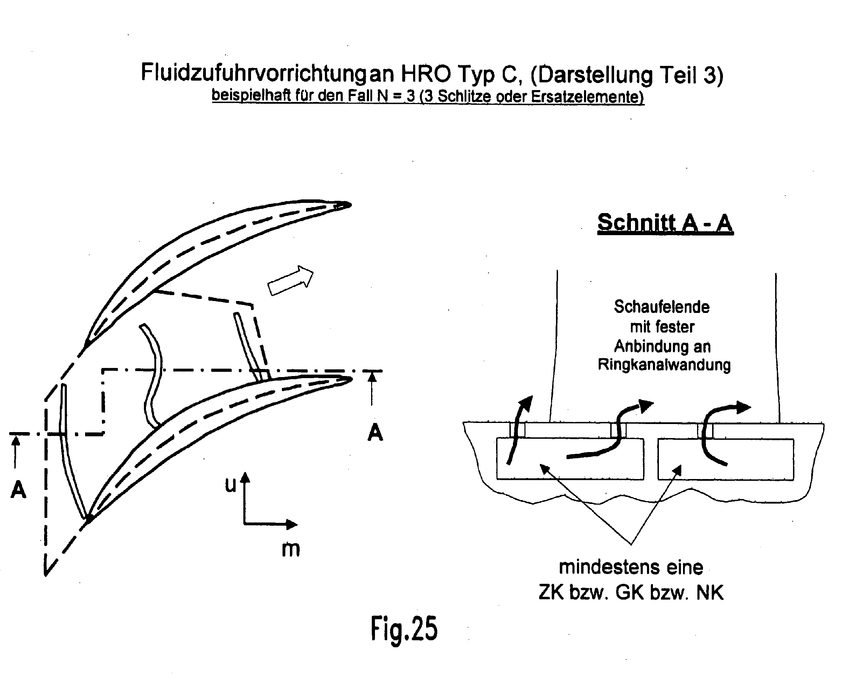

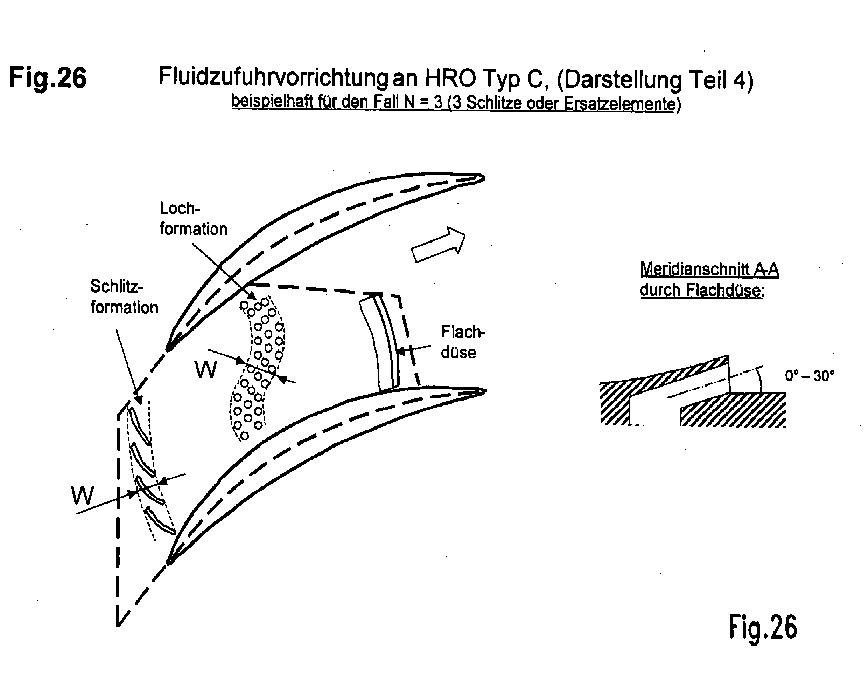

Die Fig. 23 bis 26 zeigen Beispiele für die Fluidzufuhrvorrichtung an Hinterkanten- und Randnahen Oberflächen (HRO) des Typs C (Fig. 23), beispielhaft für den Fall N=3 (Fig. 24) sowie beispielhaft für den Fall N=3 (3 Schlitze oder Ersatzelemente) siehe Fig. 25 und 26. Gezeigt sind Konfigurationen von Schlitzen bzw. funktional ähnlichen Ersatzelementen im vorderen Teil der Schaufelpassage. Einzelne Schlitze bzw. Ersatzelemente können unterschiedlichen Schaufelinnenkammern zugeordnet sein.

Betrachtet man die Ringkanaloberfläche in dem aus Meridianstromlinienrichtung und Umfangsrichtung gebildeten Koordinatensystem (m,u), so befindet sich eine Konfiguration von Schlitzen in einer Zone der Ringkanalwand, die durch den Kurvenzug F1-F2-F3-F4-F5-F6-F7-F1 umschlossen wird. Die Strecke F1-F2 stellt, ebenso wie die Strecke F6-F7, eine tangentiale Verlängerung der Profilskelettlinie SKL gegen die Strömungsrichtung dar. Die Strecke F1-F7 liegt 25% der meridionalen Profilsehnenlänge (0.25 * Cm) vor der Vorderkantenebene. Die Strecke F2-F3 ist durch die Saugseitenkontur SS zwischen Vorderkante VK und einem Punkt 20% der meridionalen Sehnenlänge (0.2 * Cm) vor der Hinterkante HK gegeben. Die Strecke F3-F4 verläuft senkrecht zur tangentialen Verlängerung der Profilskelettlinie an der Hinterkante und führt saugseitig um einen Betrag von 60% der austrittseitigen Schaufelteilung (0,6 * S) in Richtung der Druckseite des benachbarten Profils. Die Strecke F4-F5 mündet in einen um 35% der meridionalen Profilsehnenlänge (0.35 * Cm) in der Schaufelpassage gelegenen Punkt der Druckseite des gegenüberliegenden Profils. Die Strecke F5-F6 führt entlang der Druckseite zur Vorderkante VK.

Eine Anzahl von mindestens 2 Schlitzen (Anzahl N>1) bildet eine besondere Anordnung, die etwa orthogonal zur gewünschten Richtung der Wandgrenzschichtströmung ausgerichtet ist. Das Konzept geht aus von einem Schlitz nahe der hinterkantenseitigen Begrenzung der für die Fluidzufuhr vorgesehenen Zone F1-F2-F3-F4-F5-F6-F7-F1. Weitere Schlitze sind umso stärker gegen die Meridianströmungsrichtung m geneigt, je näher sie am Eintritt des Schaufelkanals liegen. Alle Schlitze sind definiert durch einen Anfangspunkt, einen Endpunkt und eine Winkelangabe für die von Anfangs- zu Endpunkt reichende Hilfsgerade. Die Anfangspunkte befinden sich auf einer Basislinie, die entweder durch die Saugseitenkontur selbst oder an der Saugseitenkontur orientierten Linie gegeben ist, die in Umfangsrichtung u aber an keiner Stelle weiter als 20% der austrittseitigen Schaufelteilung (0,2 * S) von ihr entfernt liegt. Die Lage aller Anfangspunkte ist durch die Basislinie und einen meridionalen Abstand zur Hinterkantenebene festgelegt.

Der meridionale Hinterkantenabstand m(i) eines Anfangspunktes A(i) des Schlitzes mit der Nummer (i) beträgt

$$m(i) = 0,3*Cm + 0,7*Cm*(i - 1) / (N - 1).$$

Für m(i) gilt eine Toleranz von +/- 0,1 * Cm. Der Neigungswinkel der Hilfsgeraden zwischen dem Anfangspunkt A(i) und dem Endpunkt E(i) eines Schlitzes mit der Nummer (i) beträgt

$$alpha(i) = alpha2 + 90° + (i - 1) * ( alpha1 - alpha 2) / (N - 1).$$

Für alpha(i) gilt eine Toleranz von +/- 20°.

Der Verlauf eines jeden Schlitzes ist gestützt durch die jeweilige Hilfsgerade, muß aber mit ihr lediglich in Anfangs- und Endpunkt genau übereinstimmen. Alle Schlitze enden in den Grenzen des durch den Kurvenzug F1-F2-F3-F4-F5-F6-F7-F1 umschlossenen Ringkanalwandsegmentes.

Sie verlaufen zwischen Anfangspunkt und Endpunkt geradlinig, einfach gekrümmt oder mehrfach gekrümmt. Sie besitzen eine konstante oder in Längsrichtung veränderliche Weite W, die aber stets kleiner als 10% der austrittseitigen Schaufelteilung bleibt (W < 0,1 * S). Sie weisen eckige, angefaste oder gerundete Oberflächenkanten auf. Sie besitzen an Anfangs- und Endpunkt eine eckige Form oder einen runden (langlochähnlichen) Abschluß. Die Schlitze führen senkrecht oder schräg zur Ringkanaloberfläche durch das Wandmaterial in eine Zufuhrkammer ZK, eine Nabenkammer NK oder eine Gehäusekammer GK.

In einer abgewandelten Form tritt - bei gleichen Regeln hinsichtlich der Positionierung und des Verlaufes an der Ringkanaloberfläche sowie der Beschaffenheit der Oberflächenkanten und Orientierung in der Ringkanalwand - an die Stelle mindestens eines Schlitzes eine Formation aus mehreren geraden oder gekrümmten Schlitzen mit einer maximalen Weite W der Schlitzkonfiguration von 15% der austrittseitigen Schaufelteilung (W < 0,15 * S).

In einer anderen abgewandelten Form tritt - bei gleichen Regeln hinsichtlich der Positionierung und des Verlaufes an der Ringkanaloberfläche sowie der Beschaffenheit der Oberflächenkanten und Orientierung in der Ringkanalwand - an die Stelle mindestens eines Schlitzes eine ein- oder mehrreihige Formation von Löchern mit einer maximalen Weite W der Lochkonfiguration von 15% der austrittseitigen Schaufelteilung (W < 0,15 * S).

In einer anderen abgewandelten Form ist - bei gleichen Regeln hinsichtlich der Positionierung und des Verlaufes an der Ringkanaloberfläche - mindestens ein Schlitz als Flachdüse ausgeformt, wobei Fluid unter höchstens 30° zur Ringkanaloberfläche zugeführt wird und die Ringkanaloberfläche einen entsprechenden Absatz aufweist.

In einer anderen abgewandelten Form entfällt - bei gleichen Regeln hinsichtlich der Positionierung und des Verlaufes an der Ringkanaloberfläche sowie der Beschaffenheit der Oberflächenkanten und Orientierung in der Ringkanalwand - mindestens eines der N Elemente (Schlitz, Schlitzformation, Lochformation oder Flachdüse).

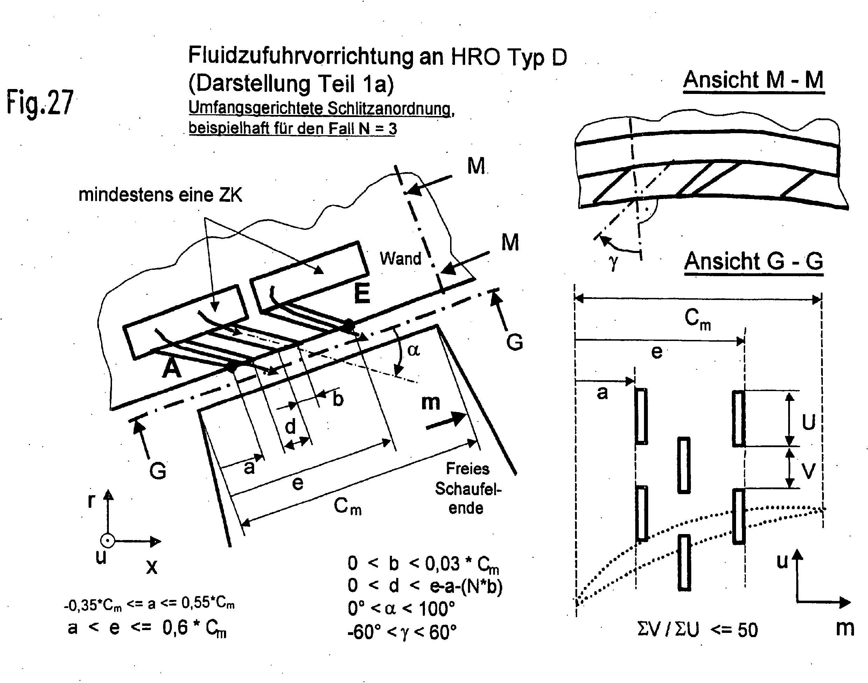

Die Fig. 27 bis 30 zeigen Ausführungsformen der Fluidzufuhrvorrichtung an Hinterkanten- und Randnahen Oberflächen (HRO) des Typs D, bei welchen eine Konfiguration von Schlitzen beziehungsweise funktional ähnlichen Ersatzelementen stromauf oder innerhalb des beschaufelten Bereiches einer Schaufelreihe mit freien Schaufelenden vorgesehen ist. Einzelne Schlitze bzw. Ersatzelemente der Konfiguration können unterschiedlichen Zufuhrkammern zugeordnet sein. Die beschriebene Ausgestaltung der Fluidzufuhrvorrichtung ist dabei nicht zu verwechseln mit vielfach beschriebenen Ausführungen einer sogenannten Gehäusestrukturierung oder eines Casing Treatments, da es nicht auf einen pulsierenden Austausch von Fluid zwischen Schlitzraum und Ringraum, sondern die lokale Zufuhr von Fluid ankommt.

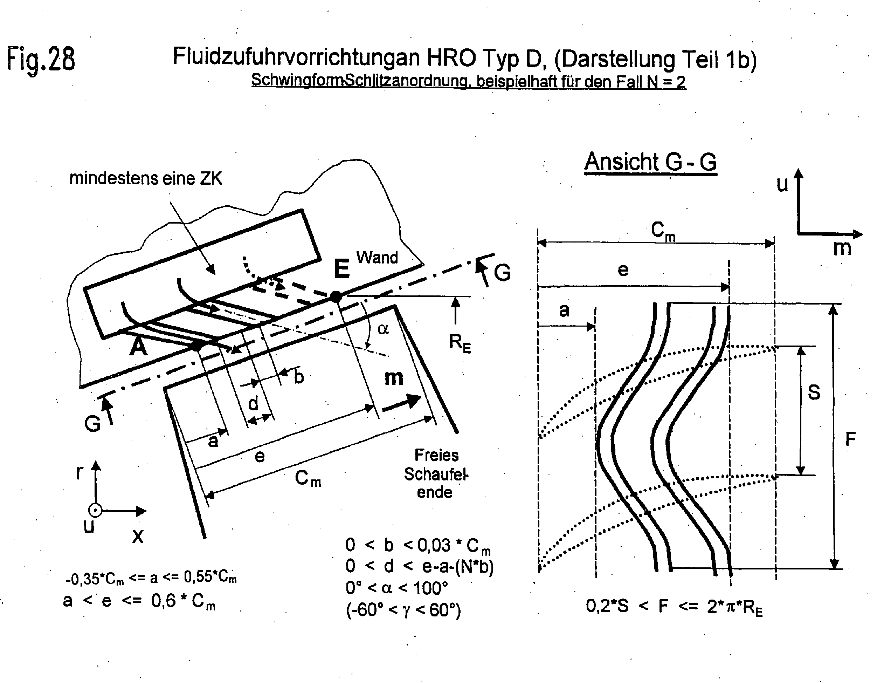

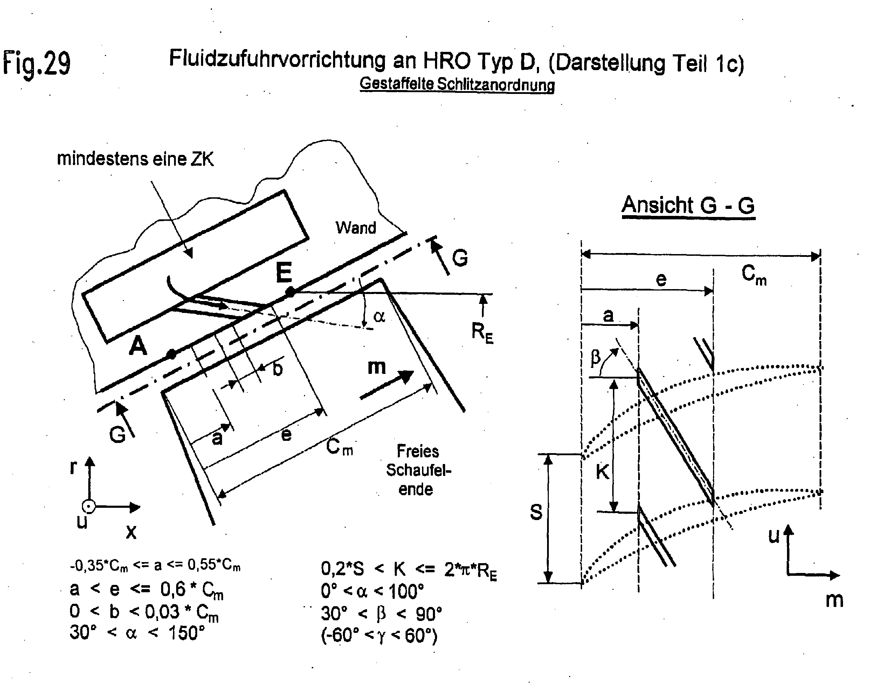

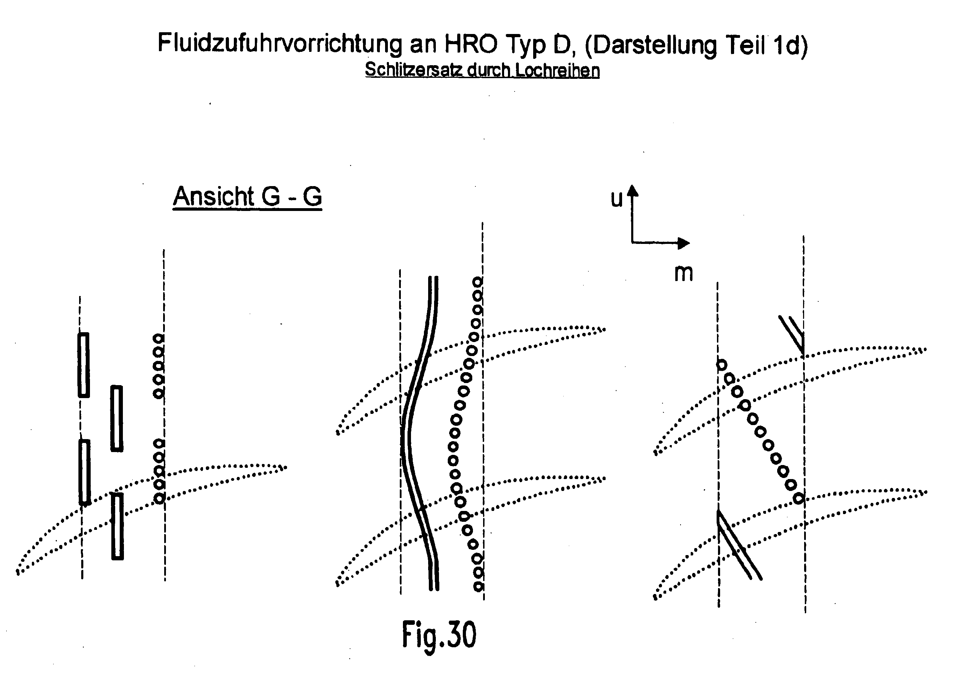

Die Fig. 27 zeigt eine Fluidzufuhrvorrichtung an Hinterkanten- und Randnahen Oberflächen (HRO) des Typs D mit einer umfangsgerichteten Schlitzanordnung, beispielhaft für den Fall N=3. In Fig. 28 ist eine Fluidzufuhrvorrichtung des Typs D beschreiben, welche eine Schwingform-Schlitzanordnung aufweist, beispielhaft für den Fall N=2. Die Fig. 29 zeigt eine Fluidzufuhrvorrichtung des Typs D mit einer gestaffelten Schlitzanordnung, während die Fig. 30 eine Ausgestaltungsvariante einer Fluidzufuhrvorrichtung des Typs D zeigt, bei welcher ein Schlitz durch Lochreihen ersetzt ist.

Im einzelnen zeigen die Fig. 27 bis 30 folgende Details:

Betrachtet man die Schaufelreihe in dem aus Axialrichtung und Radialrichtung gebildeten Koordinatensystem (x,r), so befindet sich eine Konfiguration von N Schlitzen (N >= 1) in einem Abschnitt der Ringkanalwand, der in Meridianrichtung m durch den Anfangspunkt A und den Endpunkt E begrenzt wird. Der Anfangspunkt A befindet sich in einem meridionalen Abstand a von der am Schaufelende betrachteten Schaufelvorderkante. Der Abstand a kann maximal 35% der meridionalen Sehnenlänge Cm vor die Vorderkante und maximal 55% der meridionalen Sehnenlänge Cm hinter die Vorderkante reichen ( -0,35*Cm <= a <= 0,55*Cm). Der Endpunkt E befindet sich in einem meridionalen Abstand e von der am Schaufelende betrachteten Schaufelvorderkante. Der Abstand e ist größer als der Abstand a und kann maximal 60% der meridionalen Sehnenlänge Cm hinter die Vorderkante reichen ( a < e <= 0,6*Cm).

Die Schlitze besitzen die Weite b, die zwischen 0 und 3% der meridionalen Sehnenlänge Cm variieren kann. Für die Distanz d, um die die Schlitze voneinander getrennt sind, gilt:

$$0 < d < e-a-(N*b).$$

Der Verlauf eines Schlitzes kann in Umfangsrichtung u um einen gewissen Betrag unterbrochen sein. Dies gilt sowohl für rein umfangsgerichtete als auch schräg (d.h. mit einer Meridianrichtungskomponente) verlaufende Schlitze. Die Umfangslänge V einzelner Unterbrechungen und die Umfangslänge U einzelner verbleibender Schlitzabschnitte können entlang des Schlitzverlaufes unterschiedlich sein, die Summen der verbleibenden Schlitzlängen und der Unterbrechungslängen müssen jedoch in einem Verhältnis von kleiner als 50 stehen ( Summe V / Summe U < 50). Die Schlitze weisen eckige, angefaste oder gerundete Oberflächenkanten auf. Sie besitzen an ihren Enden eine eckige Form oder einen runden (langlochähnlichen) Abschluß. Die Schlitze führen senkrecht oder schräg zur Ringkanaloberfläche durch das Wandmaterial in eine Zufuhrkammer ZK und nehmen dabei einen geradlinigen oder gekrümmten Verlauf. Betrachtet man die Meridianebene (x,r), so weisen die Schlitze eine Neigung von 0 bis 100° gegen die Meridianströmungsrichtung m auf (0° < alpha < 100°). In Umfangsrichtung weisen die Schlitze in ihrem gesamten Verlauf eine Neigung von -60° bis 60° gegen die Radialrichtung r auf (-60° < gamma < 60°). Die Fig. 27 zeigt den Fall von N=3 unterbrochenen Schlitzen bei reiner Umfangsausrichtung.

In einer besonderen Ausführung, siehe Fig. 28, ändert sich die Lage der Schlitze in Meridianströmungsrichtung periodisch entlang des Umfanges. Der Abstand F zwischen zwei benachbarten Positionen, an denen der Schlitz (einschließlich vorhandener Unterbrechungsabschnitte gemäß obiger Spezifikation) die gleiche Meridiankoordinate aufweist, ist dabei durch die am Schaufelende gemessene Schaufelteilung S und die mit der Kreiszahl PI und dem Endpunktradius RE berechnete Umfangslänge festgelegt (0,2*S < F <= 2*PI*RE). Dies beinhaltet insbesondere eine Schlitzkonfiguration, bei der der Verlauf (Umfangs- und Meridiankoordinate) einzelner Schlitze einschließlich ihrer Unterbrechungsabschnitte durch einen schrägen Kegelschnitt durch die Gehäuse- bzw. Nabenkontur gegeben ist. Die Schlitze führen senkrecht oder schräg zur Ringkanaloberfläche durch das Wandmaterial in eine Zufuhrkammer ZK und nehmen dabei einen geradlinigen oder gekrümmten Verlauf. Betrachtet man die Meridianebene (x,r), so weisen die Schlitze auch hier eine Neigung von 0 bis 100° gegen die Meridanströmungsrichtung m auf (0° < alpha < 100°). Sofern Unterbrechungsabschnitte existieren, weisen die Schlitze in Umfangsrichtung in ihrem gesamten Verlauf eine Neigung von -60° bis 60° gegen die Radialrichtung r auf (-60° < gamma < 60°). Die Fig. 28 zeigt den Fall von N=2 nicht unterbrochenen Schlitzen in Schwingform.

In einer anderen besonderen Ausführung, siehe Fig. 29, ist der Schlitzverlauf periodisch unterbrochen und die Schlitzabschnitte sind gestaffelt angeordnet. In der durch die Meridian- und die Umfangsrichtung gebildete Ebene sind die Schlitzabschnitte um den Winkel beta, der zwischen 30° und 90° betragen kann, gegen die Meridianströmungsrichtung geneigt (30° < beta < 90°). Dabei muss der Schlitzabschnitt nicht geradlinig verlaufen, sondern kann einfach oder mehrfach gekrümmt sein. Die Teilung K zwischen zwei Schlitzabschnitten ist durch die am Schaufelende gemessene Schaufelteilung S und die mit der Kreiszahl PI und dem Endpunktradius RE berechnete Umfangslänge festgelegt (0,2*S < K <= 2*PI*RE). Betrachtet man die Meridianebene (x,r), so weisen die Schlitze auch hier eine Neigung von 0 bis 100° gegen die Meridianströmungsrichtung m auf (0° < alpha < 100°). Die Schlitze weisen in Umfangsrichtung in ihrem gesamten Verlauf eine Neigung von -60° bis 60° gegen die Radialrichtung r auf (-60° < gamma < 60°). Bei besonderen Anforderungen kann eine ausgeprägte Schlitztordierung vorliegen, so daß die Bereiche von alpha und gamma bereits entlang eines Schlitzabschnittes teilweise oder voll ausgeschöpft werden.

Alternativ kann an die Stelle mindestens eines Schlitzabschnitts der Gesamtkonfiguration eine Lochreihe treten, siehe Fig. 30. Der Lochdurchmesser unterliegt den selben Einschränkungen wie die Schlitzbreite b.

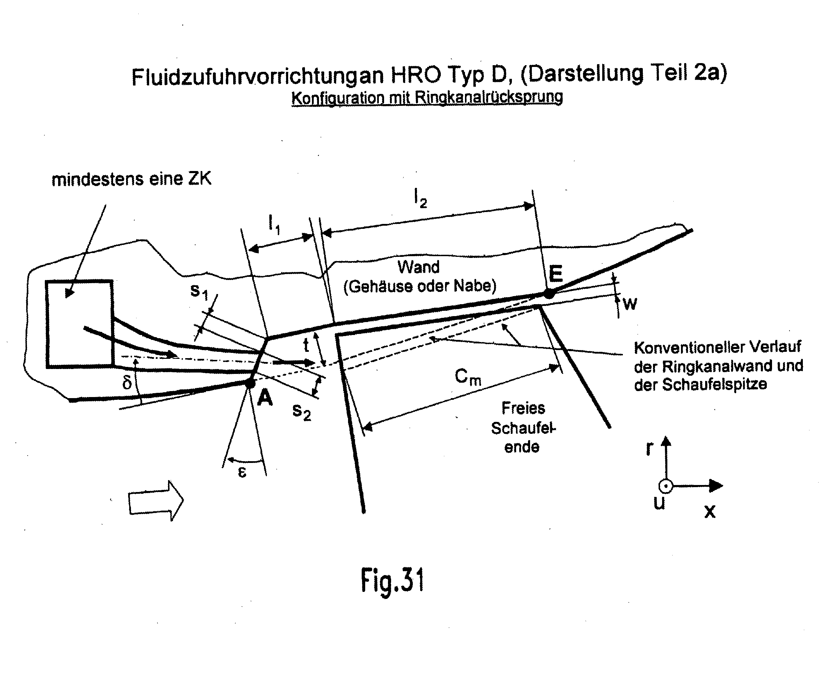

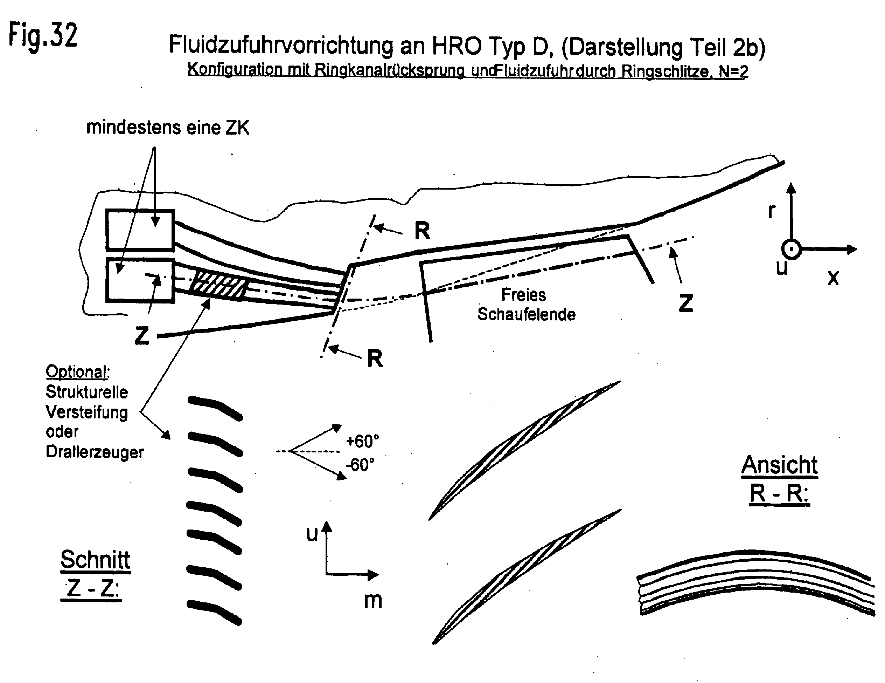

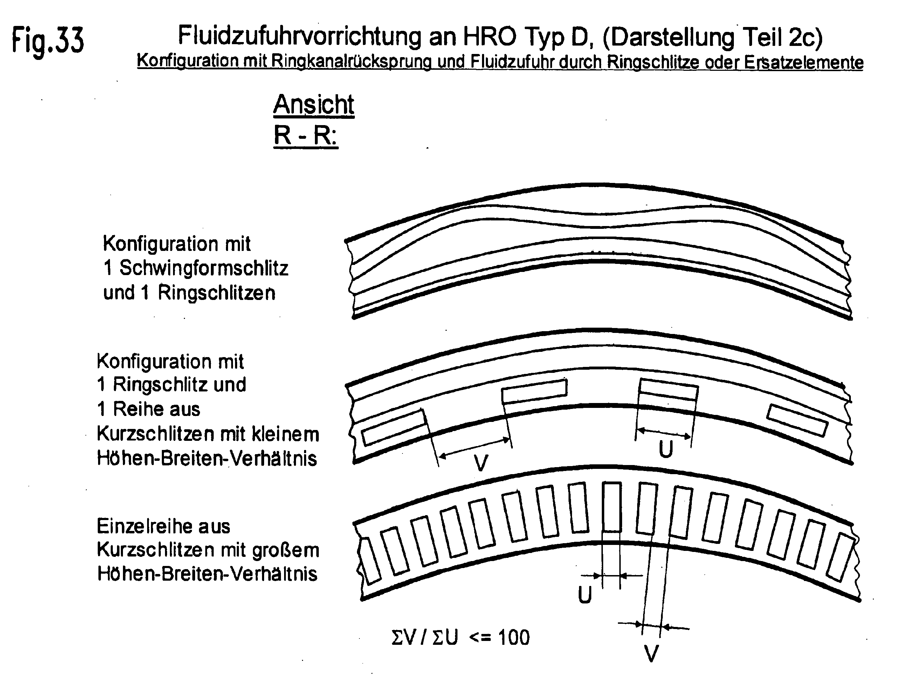

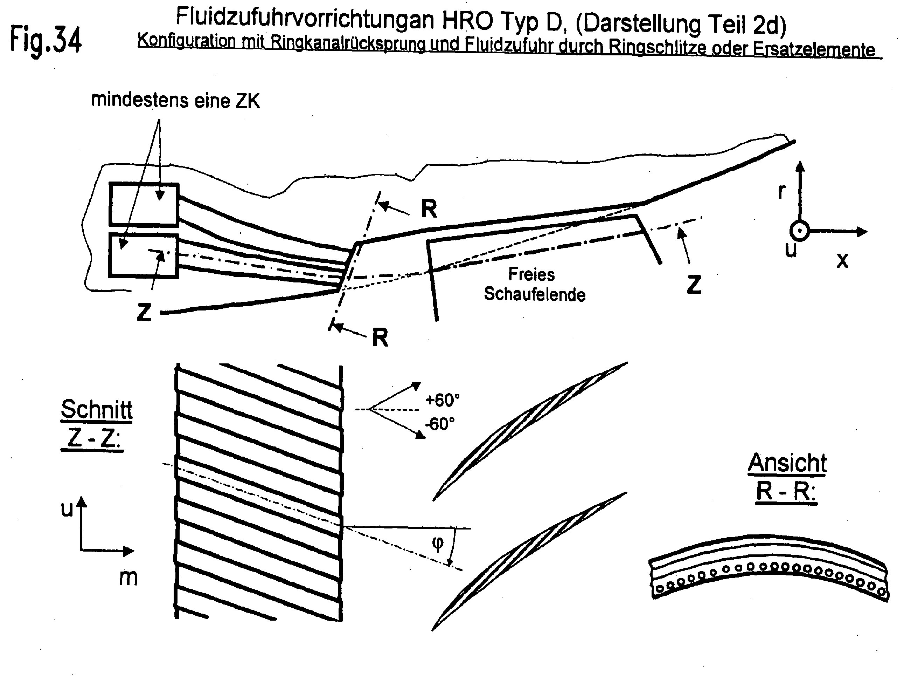

Die Fig. 31 zeigt eine efindungsgemäßen Fluidzufuhrvorrichtung an Hinterkanten- und Randnahen Oberflächen (HRO) des Typs D mit einer umfangsgerichteten Schlitzanordnung an der Flanke eines Ringkanalrücksprunges, beispielhaft für den Fall N=1. In Fig. 32 ist eine Fluidzufuhrvorrichtung des Typs D an der Flanke eines Ringkanalrücksprunges für den Fall N=2 beschreiben, bei welcher in mindestens einem der existierenden Ringschlitze ein Drallerzeuger vorgesehen ist. Die Fig. 33 zeigt die Ausgestaltungsvariante einer Fluidzufuhrvorrichtung des Typs D an der Flanke eines Ringkanalrücksprunges, bei welcher ein Ringschlitz durch einen Schwingformschlitz oder unterschiedliche Arten von Kurzschlitzreihen ersetzt ist. Die Fig. 34 zeigt eine Fluidzufuhrvorrichtung des Typs D an der Flanke eines Ringkanalrücksprunges, bei welcher ein Schlitz durch eine Lochreihe ersetzt ist.

Im einzelnen zeigen die Fig. 31 bis 34 folgende Details der erfindungsgemäßen Lösung:

Betrachtet man die die Schaufelreihe in dem aus Axialrichtung und Radialrichtung gebildeten Koordinatensystem (x,r), siehe Fig. 31, so befindet sich erfindungsgemäß eine Konfiguration von N Schlitzen (N >= 1) an der Flanke eines Ringkanalrücksprunges außerhalb des beschaufelten Bereiches einer Schaufelreihe mit freien Schaufelenden. Der Rücksprung beginnt maximal 35% der an der Schaufelspitze gemessenen meridionalen Sehnenlänge (0,35*Cm) stromauf der Schaufelvorderkante (Punkt A) und endet stromab der Vorderkante (Punkt E). Das Ende des Rücksprunges ist gekennzeichnet durch ein Übergehen in die konventionelle, glatte Ringkanalkontur. Das Rücksprungende (Punkt E) muss erfindungsgemäß (anders als in Fig. 31 gezeigt) im Bereich der Schaufel angeordnet sein und dabei einen Knick im meridionalen Verlauf der Schaufelspitze und des Radialspalts hervorrufen. Erfindungsgemäß nimmt die Tiefe t des Rücksprungs vom Endpunkt E bis zu einem Punkt zwischen der Vorderkante und dem Anfangspunkt A kontinuierlich zu und erreicht dort seinen Maximalbetrag. Dabei muss die Rücksprungtiefe t mindestens 0,3 mm betragen und darf 20% der meridionalen Schaufelspitzensehnenlänge nicht überschreiten (0,3mm <= t <= 0,2*Cm). Unter Einhaltung dieser Randbedingungen kann die Kontur des Rücksprunges problemangepaßt ausgestaltet werden. Als besonders effektive und kostengünstige Variante bietet sich erfindungsgemäß die in Fig. 31 dargestellte Rücksprungkontur aus drei Geradenstücken an. Dabei schließt die Flanke des Rücksprunges mit der Rinkanalwandnormalen im Punkt A einen Winkel epsilon ein (-30° <= epsilon <= 60°). Stromab der Flanke bleibt die Rücksprungtiefe t über die Strecke 11, die maximal bis zur Schaufelvorderkante reicht, etwa konstant. An einem Punkt stromauf oder an der Vorderkante schließt sich an die Strecke 11 die Strecke 12 an, die bis zum Punkt E an oder stromab der Hinterkante reicht. An der Flanke befindet sich ein Ringschlitz, aus dem Fluid in den Hauptströmungspfad zugeführt wird. Die Orientierung des Ringschlitzes und somit die Ausströmrichtung ist gegen die Tangente an die Ringkanalkontur im Anfangspunkt A um den Winkel delta geneigt (-45° <= delta <= 45°). Für den Abstand s1 zwischen Ringschlitz und Konturstrecke 1 beträgt weniger als 3 Radialspaltweiten w (s1 < 3*w). Für die Weite s2 des Ringschlitzes gilt: s2 < t-s1.

In einer alternativen Ausgestaltung kann in mindestens einem der N Ringschlitze mindestens ein Mittel zur strukturellen Versteifung und/oder zur Erzeugung einer Strömungskomponente in Umfangsrichtung vorgesehen sein; siehe Fig. 32. Besonders günstig sind Drallerzeuger, die am Schlitzaustritt zum Hauptströmungspfad einen Umfangsströmungswinkel im Bereich von -60° bis 60° gegen die Meridianrichtung generieren.

In einer anderen alternativen Ausgestaltung kann an die Stelle mindestens eines Ringschlitzes ein Schwingformschlitz oder eine Reihe aus Kurzschlitzen treten. Die Fig. 33 zeigt dies in der aus den Fig. 31 und 32 bekannten Ansicht R-R. Der Verlauf eines Schlitzes (auch eines Schwingformschlitzes) kann zur Erzeugung einer Kurzschlitzreihe um einen gewissen Betrag unterbrochen sein. Die Umfangslänge V einzelner Unterbrechungen und die Umfangslänge U einzelner verbleibender Schlitzabschnitte können, wie in Fig. 33 für zwei einfache Konfigurationen mit Kurzschlitzen beispielhaft dargestellt, entlang des Schlitzverlaufes unterschiedlich sein, die Summen der verbleibenden Schlitzlängen und der Unterbrechungslängen müssen jedoch in einem Verhältnis von kleiner als 100 stehen ( Summe V / Summe U < 100). Dabei ist eine Mindestzahl von 2 Unterbrechungen vorgesehen. Die Schlitze weisen eckige, angefaste oder gerundete Oberflächenkanten auf. Sie besitzen an ihren Enden eine eckige Form oder einen runden (langlochähnlichen) Abschluß. Die Schlitze führen senkrecht oder schräg zur Ringkanaloberfläche durch das Wandmaterial in eine Zufuhrkammer ZK und nehmen dabei einen geradlinigen oder gekrümmten Verlauf.

Alternativ kann an die Stelle mindestens eines Schlitzabschnitts der Gesamtkonfiguration eine Lochreihe treten, Die Fig. 34 zeigt dies für den Fall des unteren Ringschlitzes einer Konfiguration mit N=2 Ringschlitzen. Der Lochdurchmesser unterliegt den selben Einschränkungen wie die Schlitzweite s2.

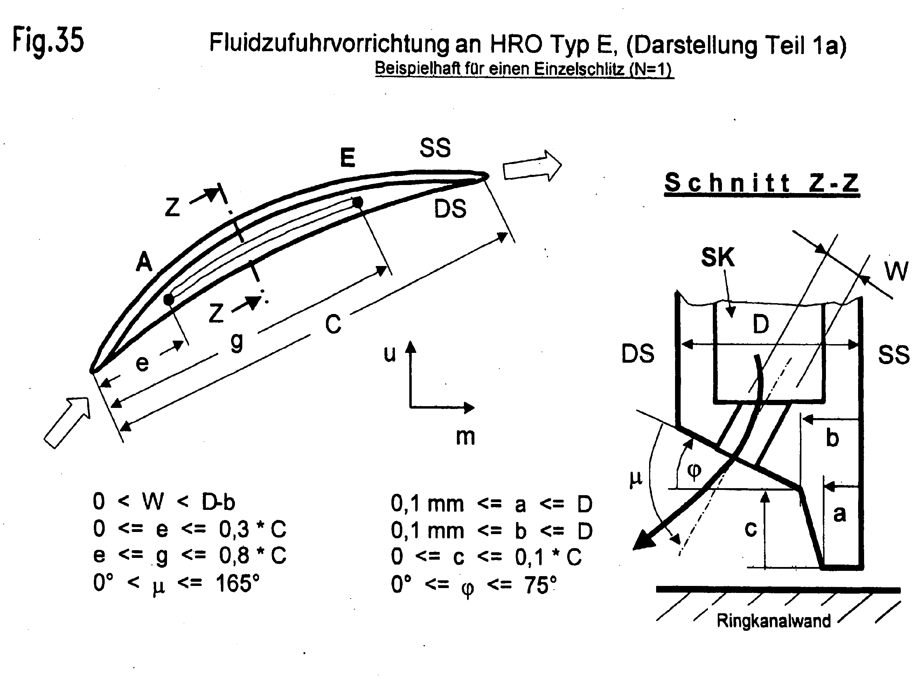

Die Fig. 35 bis 40 zeigen Beispiele der Fluidzufuhrvorrichtung an Hinterkanten- und Randnahen Oberflächen (HRO) des Typs E, bei welchen auf der Schaufelspitze angebrachte Schlitze, Rundöffnungen oder funktional ähnliche Ersatzelemente vorgesehen sind. Schlitze, Rundöffnungen oder Ersatzelemente können unterschiedlichen Schaufelkammern zugeordnet sein.

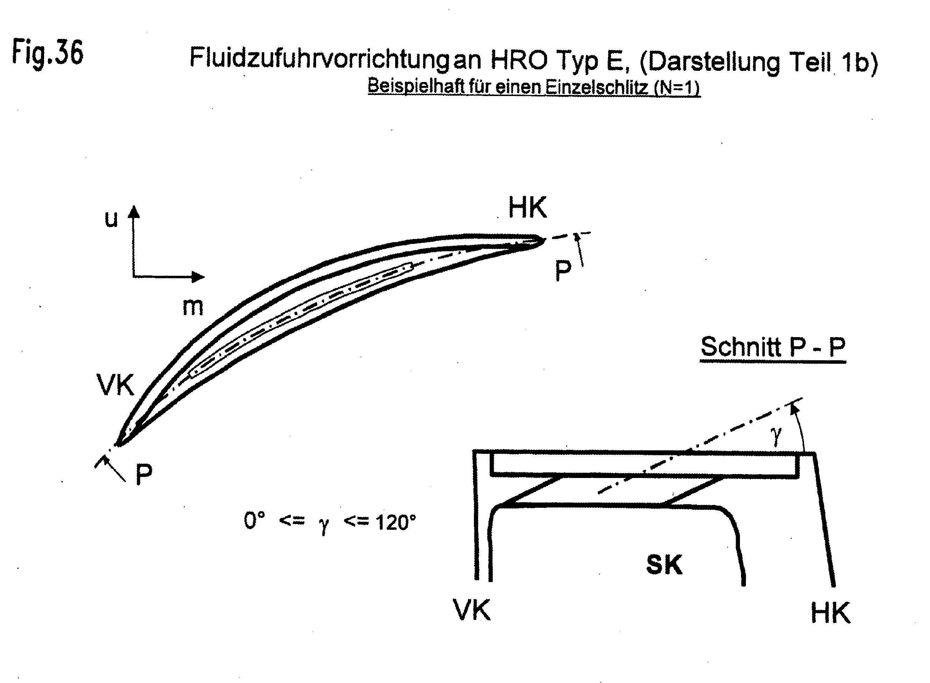

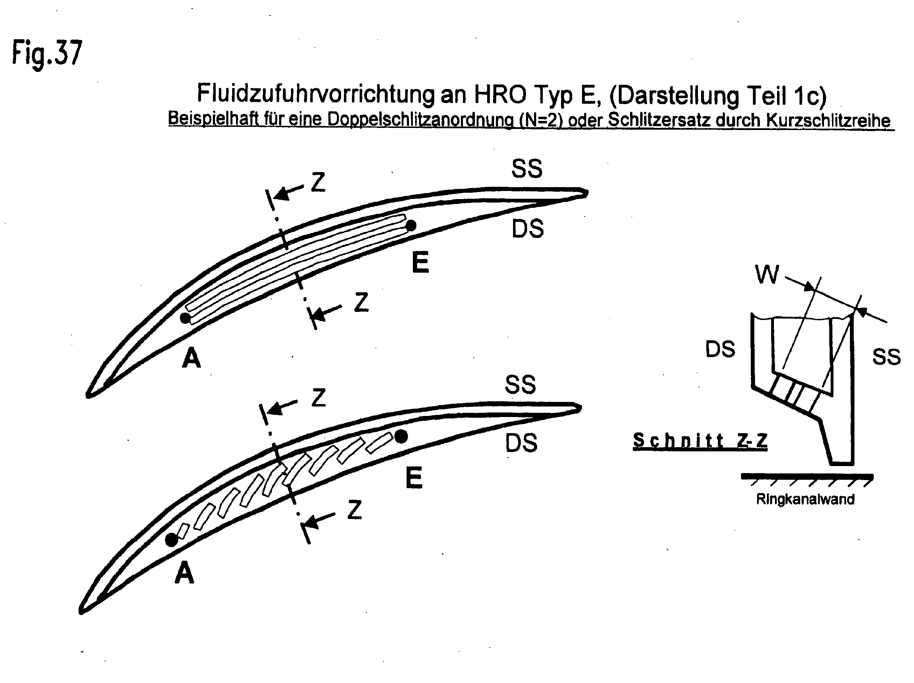

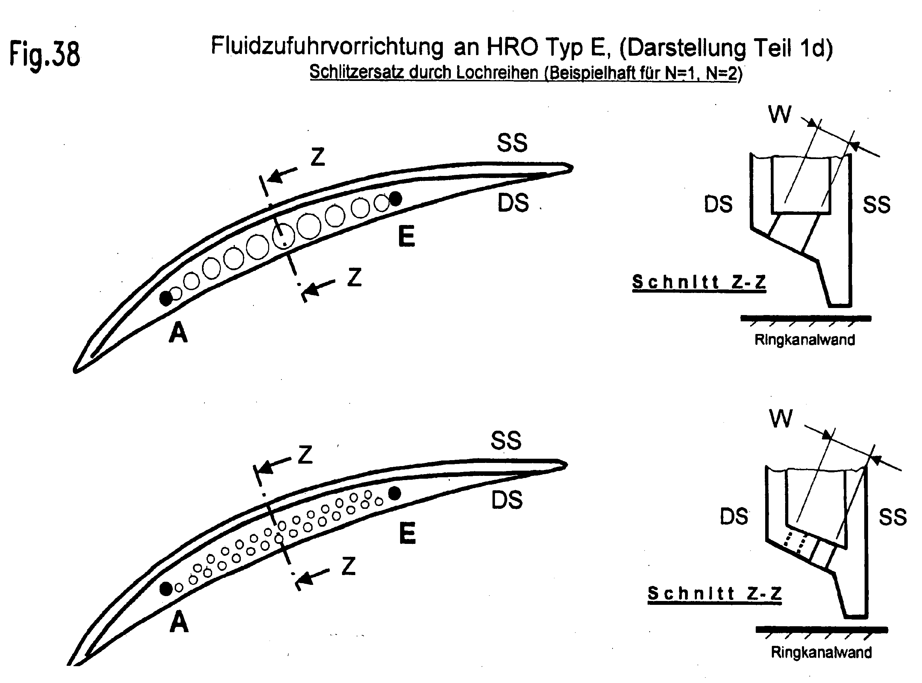

Dabei zeigt die Fig. 35 und 36 eine Fluidzufuhrvorrichtung an Hinterkanten- und Randnahen Oberflächen (HRO) des Typs E mit mindestens einem Schlitz oder Ersatzelementen entlang der Schaufelspitze, hier beispielhaft für den Fall eines Schlitzes (N=1). Weitere Varianten hierzu sind in den Fig. 37 und 38 abgebildet.

Im einzelnen zeigen die Fig. 35 bis 38 folgende Details:

Betrachtet wird die Spitze einer Schaufel in dem aus Meridianströmungsrichtung und Umfangsrichtung gebildeten Koordinatensystem (m,u). Die Schaufelspitze ist entweder konventionell (etwa rechtwinklig) oder mit einem Absatz ausgeführt, dessen spezifische Formgebung durch die Größen a, b, c und phi gegeben ist. Die stirnseitige Absatzbreite a hat einen Betrag von minimal einem Zehntel Millimeter und wird maximal so groß wie die örtlich vorliegende Profildicke D (0,1 mm <= a <= D). Die Absatzfußbreite b hat einen Betrag von minimal einem Zehntel Millimeter und wird maximal so groß wie die örtlich vorliegende Profildicke D (0,1 mm <= b <= D). Die Absatztiefe c beträgt bis zu 10% der Profilsehnenlänge (0 <= c <= 0,1*C). Der Absatzneigungswinkel phi, der gegen die Ringkanalwand gemessen wird, nimmt Beträge zwischen 0 und 75 Grad an (0° <= phi <= 75° ). Die Größen a, b, c und phi können sich in den spezifizierten Grenzen mit der jeweils betrachteten Profiltiefe ändern.

Auf der Stirnseite der Schaufelspitze befinden sich N Schlitze (N>=1), die sich entlang des Profils erstrecken. Der Anfangspunkt A liegt zwischen der Vorderkante VK und einer Profiltiefe von 30% der Sehnenlänge C. Der Endpunkt E liegt zwischen dem Anfangspunkt A und einer Profiltiefe von 80% der Profilsehnenlänge C. Die Weite W der Schlitzanordnung ist veränderlich und nimmt maximal die je nach Profiltiefe aktuelle, um die Absatzfußbreite b reduzierte Profildicke D an (0 < W < D-b). Der Schlitz weist eckige, angefaste oder gerundete Oberflächenkanten auf. Sie besitzen an Anfangs- und Endpunkt eine eckige Form oder einen runden (langlochähnlichen) Abschluß. Senkrecht zur Profiltiefenrichtung betrachtet (Schnitt Z-Z) führt ein Schlitz senkrecht oder schräg unter dem zur Schaufelspitzenoberfläche gemessenen Winkel my durch das Wandmaterial in eine Schaufelkammer SK (0° <= my <= 165°). Längs zur Profiltiefenrichtung betrachtet (Schnitt P-P) führt ein Schlitz senkrecht oder schräg unter dem zur Schaufelspitzenoberfläche gemessenen Winkel gamma durch das Wandmaterial in eine Schaufelkammer SK (0° <= gamma <= 120°).

In einer abgewandelten Form tritt - bei gleichen Regeln hinsichtlich der Positionierung und des Verlaufes an der Schaufelspitze sowie der Beschaffenheit der Oberflächenkanten und Orientierung in der Schaufelspitzenwand - an die Stelle des Schlitzes eine Formation aus mehreren geraden oder gekrümmten Schlitzen mit einer maximalen Weite W der Schlitzkonfiguration von 0 < W < D-b.

In einer abgewandelten Form tritt - bei gleichen Regeln hinsichtlich der Positionierung und des Verlaufes entlang der Schaufelspitze sowie der Beschaffenheit der Oberflächenkanten und Orientierung in der Schaufelspitzenwand - an die Stelle mindestens eines Schlitzes eine Formation aus mehreren Löchern.

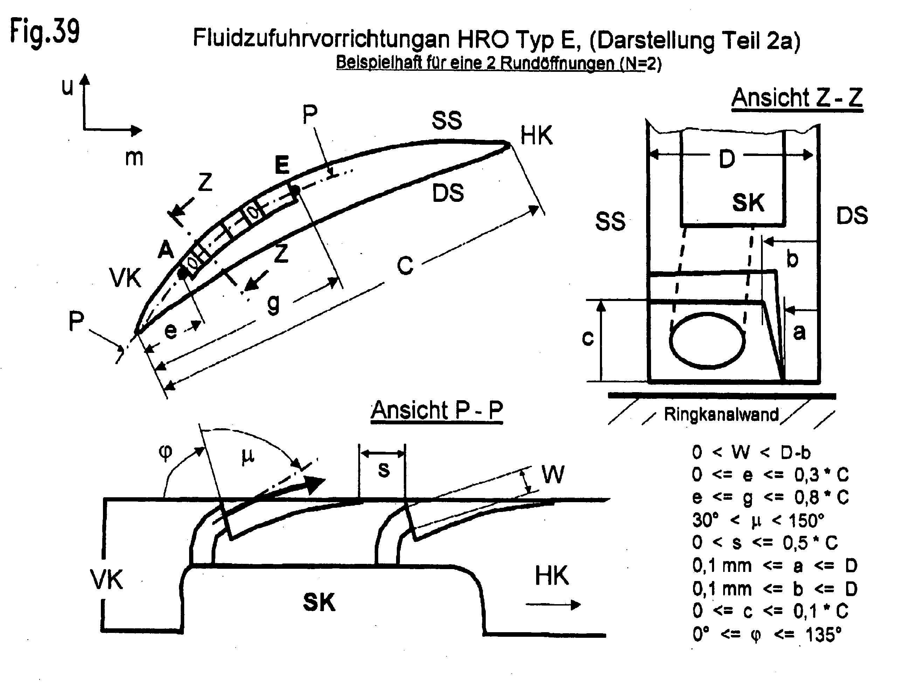

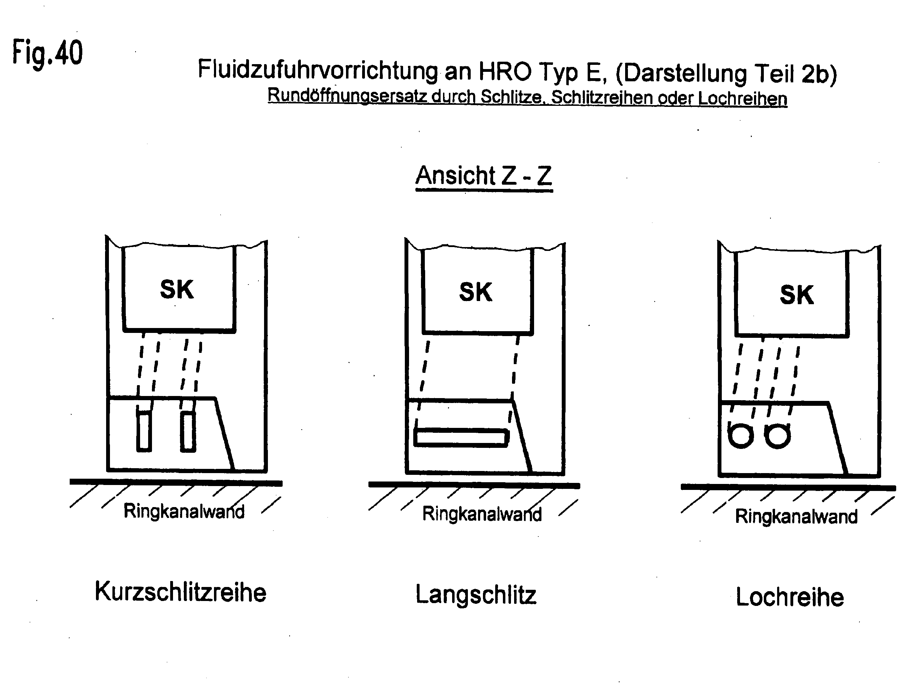

Die Fig. 39 zeigt eine Fluidzufuhrvorrichtung an Hinterkanten- und Randnahen Oberflächen (HRO) des Typs E mit mindestens einer in einer Ausnehmung vorgesehenen Rundöffnung, hier beispielhaft für den Fall zweier Rundöffnungen (N=2). Weitere Varianten mit Ersatzelementen sind in Fig. 40 abgebildet.

Im Einzelnen zeigen die Fig. 39 und 40 folgende Details:

Betrachtet wird die Spitze einer Schaufel in dem aus Meridianströmungsrichtung und Umfangsrichtung gebildeten Koordinatensystem (m,u). Die Schaufelspitze ist entweder konventionell (etwa rechtwinklig) oder lokal mit mindestens einer absatzartigen Ausnehmung ausgeführt, dessen spezifische Formgebung durch die Größen a, b und c gegeben ist. Die stirnseitige Absatzbreite a hat einen Betrag von minimal einem Zehntel Millimeter und wird maximal so groß wie die örtlich vorliegende Profildicke D (0,1 mm <= a <= D). Die Absatzfußbreite b hat einen Betrag von minimal einem Zehntel Millimeter und wird maximal so groß wie die örtlich vorliegende Profildicke D (0,1 mm <= b <= D). Die Absatztiefe c beträgt bis zu 10% der Profilsehnenlänge (0 <= c <= 0,1*C). Die Größen a, b und c können sich in den spezifizierten Grenzen mit der jeweils betrachteten Profiltiefe ändern.

Die Ausnehmung ist unter dem Flankenwinkel phi, der gegen die Schaufeloberkante gemessen wird (0° <= phi <= 135° ), in die Schaufelspitze eingearbeitet. Vom tiefsten Punkt aus verläuft die Ausnehmung in Profiltiefenrichtung immer weniger tief und endet schließlich wieder an der Schaufelspitzenoberfläche. Nach einer freien Distanz s kann eine weitere Ausnehmung folgen (0 <= s <= 0,5*C). Die gesamte Konfiguration der Ausnehmungen reicht vom Anfangspunkt A bis zum Endpunkt E. Der Anfangspunkt A liegt zwischen der Vorderkante VK und einer Profiltiefe von 30%der Sehnenlänge C. Der Endpunkt E liegt zwischen dem Anfangspunkt A und einer Profiltiefe von 80% der Profilsehnenlänge C.

An der unter dem Flankenwinkel phi geneigten Flanke der Ausnehmung befindet sich eine Rundöffnung, deren Achse am Austrittsquerschnitt ihrerseits in Profiltiefenrichtung gegen die Flanke um den Winkel my geneigt ist (30° <= my <= 150°). Die Weite W der Rundöffnung ist von Position zu Position veränderlich und nimmt maximal die Breite der Ausnehmung an (0 < W < D-b). Die Rundöffnung weist eckige, angefaste oder gerundete Oberflächenkanten auf.

In einer abgewandelten Form tritt - bei gleichen Regeln hinsichtlich der Positionierung und des Verlaufes an der Schaufelspitze sowie der Beschaffenheit der Oberflächenkanten und Orientierung in der Schaufelspitzenwand - an die Stelle einer Rundöffnung eine Lochreihe oder mindestens ein Schlitz, dessen Anfangs- und Endpunkt eine eckige Form oder einen runden (langlochähnlichen) Abschluß besitzen kann.

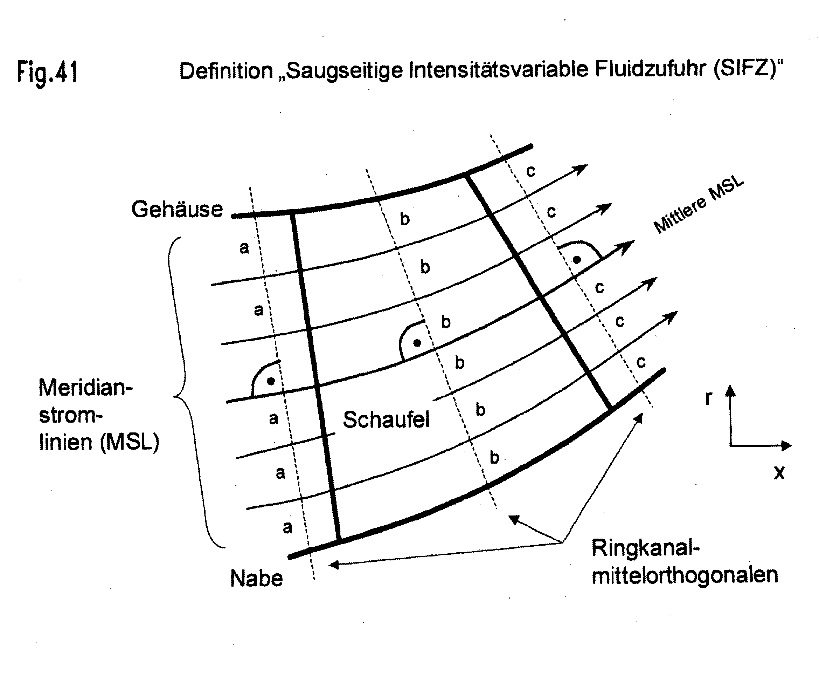

Die Fig. 41 bis 43 zeigen Ausführungsbeispiele der Vorrichtung zur saugseitigen, intensitätsvariablen Fluidzufuhr (SIFZ) an einer Rotor- oder Statorreihe. Hierbei ist in aerodynamisch kritischen Zonen auf der Schaufelsaugseite eine Formation aus Schlitzen bzw. funktional ähnlichen Ersatzelemente vorgesehen, die eine variable Intensität der Fluidzufuhr in meridianstromlinienorthogonaler Richtung ermöglicht. Die Fluidzufuhr geschieht durch eine Anzahl von Öffnungen, die unterschiedlichen Schaufelinnenkammern zugeordnet sein können.

Wie in Fig. 41 dargestellt ist, gilt im Einzelnen das Folgende:

Eine Schaufelreihe der Strömungsarbeitsmaschine wird in dem aus Axial- und Radialrichtung gebildeten Koordinatensystem (x, r) betrachtet. Die Festlegung der Vorrichtung zur SIFZ orientiert sich an einer Anzahl von Meridianstromlinien, deren Stützstellen aus einer zwischen Nabe und Gehäuse äquidistanten Teilung der Ringkanalmittelorthogonalen hervorgehen. Dies ist in Fig. 41 beispielhaft für je eine Ringkanalmittelorthogonale vor (siehe gleiche Strecken a), innerhalb (siehe gleiche Strecken b) und hinter der Schaufelreihe (siehe gleiche Strecken c) gezeigt.

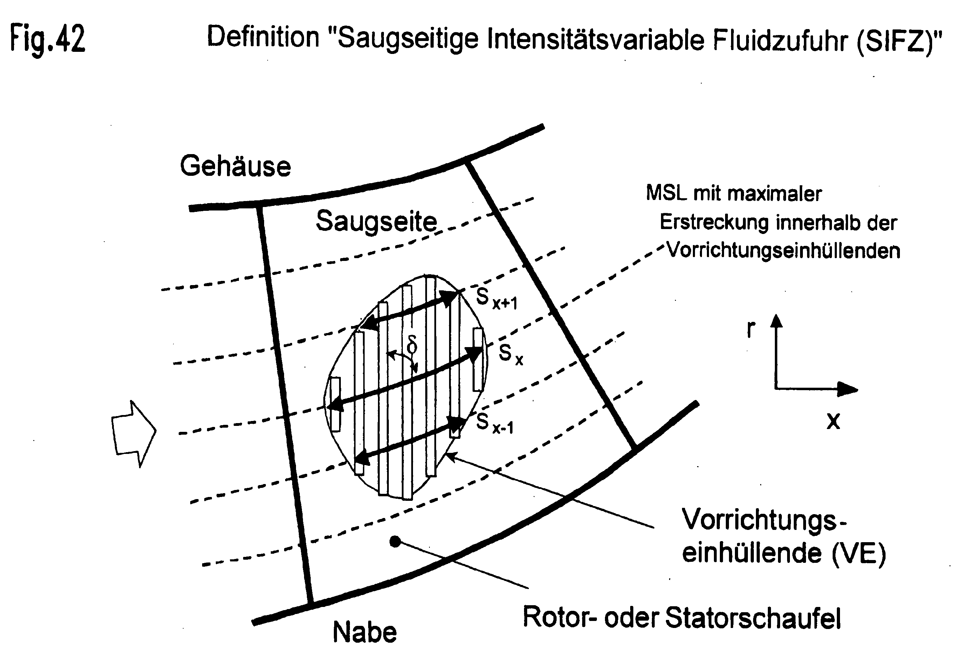

Die Fig. 42 zeigt ein Ausführungsbeispiel der Vorrichtung zur SIFZ. Die Vorrichtung besteht aus einem Verbund von mindestens zwei Öffnungen (N>=2), die innerhalb eines Teilbereiches der Saugseite mindestens einer Schaufel einer Rotor- oder Statorreihe vorgesehen sind. Die von der Vorrichtung eingenommene Zone der Saugseite wird durch die Einhüllende um alle zum Verbund gehörenden Öffnungen beschrieben (Vorrichtungseinhüllende VE). Die Vorrichtung ist so beschaffen, daß entlang einer bestimmten Meridianstromlinie die maximale Meridianerstreckung S(x) vorliegt.

der Übergang zu benachbarten Meridianstromlinien ergibt eine in Richtung des Gehäuses und in Richtung der Nabe stufenweise oder kontinuierlich abnehmende Meridianerstreckung. Von Stromlinie zu Stromlinie gilt folglich: S(x) >= S(x+1) >= ... >= S(x+n) bzw. S(x) >= S(x-1) >= ... >= S(x-n). In der gewählten Darstellung besteht die Vorrichtung aus einer Anzahl von geraden, parallelen Schlitzen. Jedoch kann jeder Schlitz einfach oder mehrfach gekrümmt verlaufen, konstante oder in seiner Längsrichtung veränderliche Breite aufweisen, und am Anfangs- und Endpunkt eine eckige Form oder einen runden (langlochähnlichen) Abschluss besitzen. Zwischen Schlitz und Meridianstromlinie kann ein beliebiger Neigungswinkel delta liegen. Die Schlitze führen senkrecht oder schräg unter mindestens 5° zur Saugseitenoberfläche durch das Wandmaterial in eine Schaufelinnenkammer SK.

In einer abgewandelten Form tritt - bei gleichen Regeln hinsichtlich der Anordnung und des Verlaufes an der Saugseitenoberfläche sowie der Beschaffenheit der Oberflächenkanten und Orientierung in der Saugseitenwand - an die Stelle mindestens eines Schlitzes eine ein- oder mehrreihige Formation von Löchern.

In einer anderen abgewandelten Form ist - bei gleichen Regeln hinsichtlich der Anordnung und des Verlaufes an der Saugseitenoberfläche - mindestens ein Schlitz als Flachdüse ausgeformt.

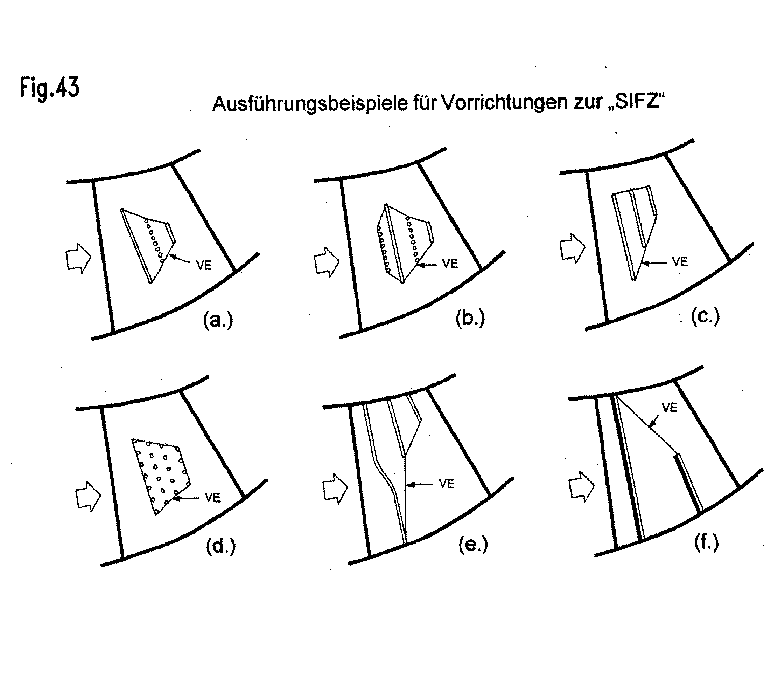

Die Fig. 43 zeigt unterschiedliche Ausführungsvarianten einer Vorrichtung zur SIFZ. Im Einzelnen zeigen dabei die Ausführungsbeispiele Folgendes:

Die Fig. 43a zeigt eine Rotor- oder Statorbaugruppe, die zur Realisierung der meridianstromlinienorthogonalen Variation der Fluidentnahmeintensität auf der Saugseite eine Formation aus 2 Schlitzen und einer Lochreihe aufweist. Die Vorrichtung bedeckt nur einen Teil der Saugseite und ist in diesem Anwendungsbeispiel in deren Zentralbereich angeordnet. Der Verbund aus Schlitzen und Löchern ist durch die Vorrichtungseinhüllende VE umgeben und markiert. Es ist ersichtlich, dass die Meridianerstreckung der Vorrichtung hier sowohl in Richtung des Gehäuses als auch in Richtung der Nabe kontinuierlich abnimmt.

Die Fig. 43b zeigt eine gegenüber Fig. 43a abgewandelte Rotor- oder Statorbaugruppe, bei der die Schlitz- und Lochelemente eine andere Reihenfolge einnehmen und die Anzahl der Elemente erhöht ist.

Die Fig. 43c zeigt eine Rotor- oder Statorbaugruppe, die auf der Saugseite eine Formation aus 3 Schlitzen aufweist. Die Vorrichtung ist in diesem Anwendungsbeispiel primär dem Gehäuse zugewandt. Der Verbund der Öffnungen ist durch die Vorrichtungseinhüllende VE umgeben und markiert. Es ist ersichtlich, dass die Meridianerstreckung der Vorrichtung hier in Richtung des Gehäuses stufenhaft auf null sinkt und in Richtung der Nabe kontinuierlich abnimmt.

Die Fig. 43d zeigt eine Rotor- oder Statorbaugruppe, die auf der Saugseite eine Formation aus Löchern aufweist. Die Vorrichtung ist in diesem Anwendungsbeispiel im Zentralbereich der Saugseite angeordnet. Die Vorrichtungseinhüllende lässt ersehen, dass die Meridianerstreckung der Vorrichtung in diesem Anwendungsbeispiel sowohl in Richtung des Gehäuses als auch in Richtung der Nabe kontinuierlich abnimmt.

Die Fig. 43e zeigt eine Rotor- oder Statorbaugruppe, die auf der Saugseite eine Formation aus 3 Schlitzen aufweist. Die Vorrichtung liegt in diesem Anwendungsbeispiel am Gehäuse. Die Vorrichtungseinhüllende lässt ersehen, dass die Meridianerstreckung der Vorrichtung hier in Richtung der Nabe kontinuierlich abnimmt.

Die Fig. 43f zeigt eine Rotor- oder Statorbaugruppe, die auf der Saugseite eine Formation aus 2 Flachdüsen aufweist. Die Vorrichtung liegt in diesem Anwendungsbeispiel an der Nabe. Die Vorrichtungseinhüllende lässt ersehen, dass die Meridianerstreckung der Vorrichtung hier in Richtung des Gehäuses kontinuierlich abnimmt.

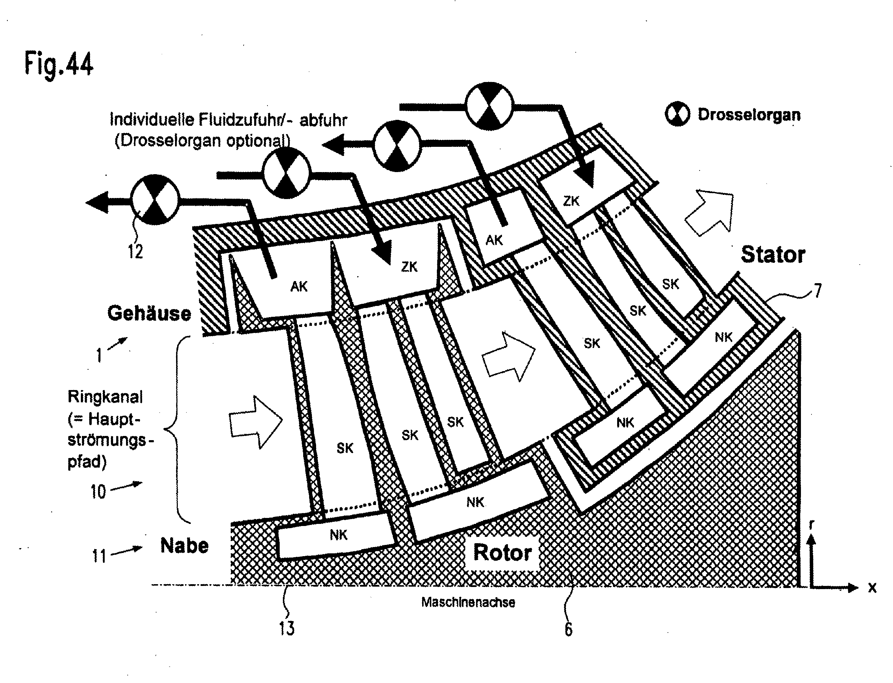

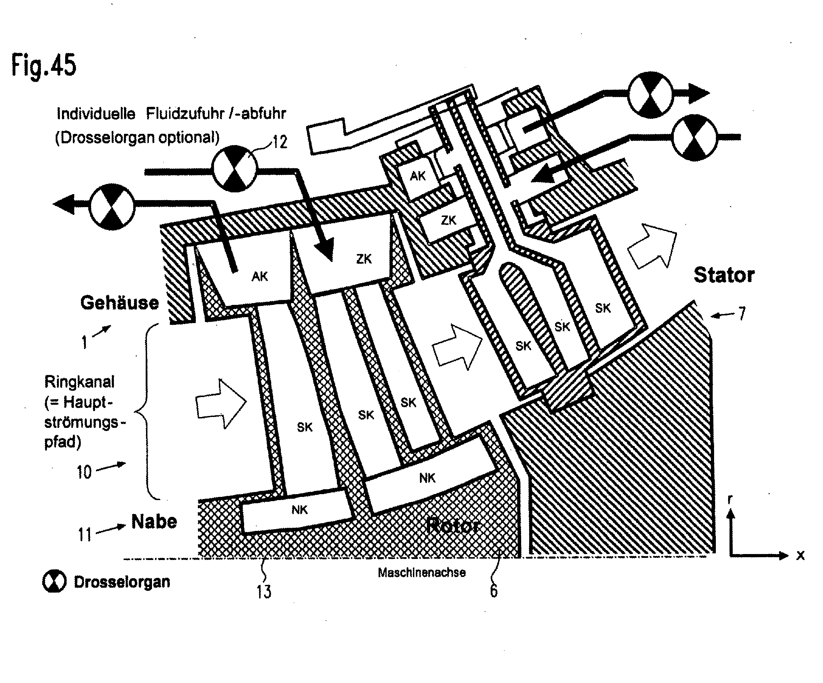

Schließlich läßt sich ein besonders hohes Maß an Strömungsbeeinflussung erreichen, wenn eine oder mehrere Lösungen für eine Fluizufuhr mit Maßnahmen zur Fluidentnahme im Bereich derselben Schaufelreihe verbunden werden. In diesem Fall existiert an mindestens einer Schaufelreihe der Strömungsarbeitsmaschine sowohl ein Kammersystem zur Fluidheranführung an die Schaufelreihe von außerhalb des Ringkanals und zur anschließenden Fluidzufuhr als auch ein nicht weiter festzulegendes Kammersystem zur Fluidentnahme und anschließender Wegführung von der Schaufelreihe in einen Bereich außerhalb des Ringkanals. Dabei vereinen sich Fluidzufuhr und Fluidentnahme an ein und derselben Schaufel eines Rotors oder Stators, oder sind an unterschiedlichen Schaufeln derselben Rotor- oder Statorreihe vorgesehen. Die Fig. 44 und 45 zeigen beispielhaft einige mögliche Varianten von Schaufelreihen mit der entsprechenden Bifunktionalität an einer Schaufel.

Bei einer Strömungsarbeitsmaschine wird somit ein bislang unerreichtes Maß an Grenzschichtbeeinflussung erzielt. Dies ist bei unterschiedlichen Arten von Strömungsarbeitsmaschinen wie Bläsern, Verdichtern, Pumpen und Ventilatoren möglich. Je nach Ausführungsvariante sind eine aerodynamische Belastung und eine Strömungsumlenkung möglich, die bis zu 50% über den nach heutigem Stand der Technik erreichten Werten liegen. Für festgeschriebene Leistungswerte einer Strömungsarbeitsmaschine läßt sich unter Beibehaltung oder einer Verbesserung des Wirkungsgrades von bis zu 1% die Anzahl der verbauten Teile um etwa 30% gegenüber einer konventionellen Bauweise senken. Die Kosten sinken um 10% bis 15%. Bei Einsatz des dargestellten Schaufelkonzeptes im Verdichter eines Flugtriebwerkes mit rund 25000 Pfund Schub ergibt eine Reduzierung des spezifischen Kraftstoffverbrauches von bis zu 0,5% und eine Gewichtsersparnis von rund 5%.

**Bezugszeichenliste**

1    Gehäuse
2    Schaufel
3    Schlitz
4    Schlitz
5    Stator
6    Rotor
7    Stator
8    Rotorschaufel
9    Statorschaufel
10   Ringkanal
11   Rotortrommel (Nabe)
12   Drosselorgan
13   Maschinenachse

**Patentansprüche**

1. Strömungsarbeitsmaschine mit zumindest einem Rotor (6), der mehrere an einer rotierenden Welle befestigte Rotorschaufeln (8) umfasst, sowie mit einem einen Ringkanal bildenden Gehäuse (1), welches unter Durchströmung vom Rotor (6) von einem Fluid durchströmt wird,
   wobei Mittel zur Zufuhr von Fluid zu mindestens einer Schaufel (8) einer Schaufelreihe des Rotors (6) an aerodynamisch kritischen Orten auf hinterkanten- und randnahen Oberflächen (HRO) vorgesehen sind,
   wobei in dem Gehäuse (1) außerhalb des beschaufelten Bereichs einer Schaufelreihe mit freien Schaufelenden eine Konfiguration von N Schlitzen (N >= 1) an der Flanke eines Ringkanalrücksprunges ausgebildet ist,
   wobei der Ringkanalrücksprung maximal 35% der an der Schaufelspitze gemessenen meridionalen Sehnenlänge stromauf der Schaufelvorderkante beginnt und stromab der Vorderkante endet,
   wobei eine Tiefe des Ringkanalrücksprungs von einem anfänglichen, eine Flanke bildenden Maximalbetrag bis zu seinem Ende kontinuierlich abnimmt, und der Rücksprung am Ende in die konventionelle, glatte Ringkanalkontur übergeht,
   wobei das Rücksprungende im Bereich der Schaufel angeordnet ist und dabei einen Knick im meridionalen Verlauf der Schaufelspitze und des Radialspalts hervorruft,
   wobei der Ringkanalrücksprung an der Flanke mit zumindest einem Schlitz versehen ist, durch welchen Fluid zuführbar ist.

2. Strömungsarbeitsmaschine nach Anspruch 1, **dadurch gekennzeichnet, dass** die Tiefe (t) des Ringkanalrücksprungs mindestens 0,3 mm beträgt und 20% der meridionalen Schaufelspitzensehnenlänge nicht überschreitet.

3. Strömungsarbeitsmaschine nach Anspruch 1 oder 2, **dadurch gekennzeichnet, dass** die Flanke des Rücksprungs mit der Ringkanalwandnormalen im Anfangspunkt (A) des Ringkanalrücksprungs einen Winkel zwischen kleinergleich -30° und kleinergleich 60° einschließt.

4. Strömungsarbeitsmaschine nach einem der Ansprüche 1 bis 3, **dadurch gekennzeichnet, dass** an der Flanke ein Ringschlitz zur Zuführung des Fluids ausgebildet ist.

5. Strömungsarbeitsmaschine nach Anspruch 4, **dadurch gekennzeichnet, dass** die Ausströmrichtung des Ringschlitzes gegen die Tangente an der Ringkanalkontur im Anfangspunkt A um einen Winkel zwischen kleinergleich -45° und kleinergleich 45° geneigt ist.

6. Strömungsarbeitsmaschine nach einem der Ansprüche 1 bis 3, **dadurch gekennzeichnet, dass** der Schlitz in Form eines Schwingformschlitzes ausgebildet ist.

7. Strömungsarbeitsmaschine nach einem der Ansprüche 1 bis 3, **dadurch gekennzeichnet, dass** der Schlitz in Form einer Reihe von Kurzschlitzen ausgebildet ist.

8. Strömungsarbeitsmaschine nach einem der Ansprüche 1 bis 3, **dadurch gekennzeichnet, dass** der Schlitz zur Erzeugung einer Kurzschlitzreihe unterbrochen ausgebildet ist.

9. Strömungsarbeitsmaschine nach einem der Ansprüche 1 bis 8, **dadurch gekennzeichnet, dass** ein Abstand (S1) zwischen dem Schlitz und einer an die Flanke anschließenden Konturstrecke (L1) des Ringkanalrücksprungs weniger als 3 Radialspaltweiten (w) eines zwischen dem freien Schaufelende und dem radial an dieses angrenzenden Gehäuse gebildeten Radialspaltes beträgt.

10. Strömungsarbeitsmaschine nach einem der Ansprüche 1 bis 9, **dadurch gekennzeichnet, dass** in mindestens einem Ringschlitz Mittel zur strukturellen Versteifung vorgesehen sind.

11. Strömungsarbeitsmaschine nach einem der Ansprüche 1 bis 10, **dadurch gekennzeichnet, dass** in mindestens einem Ringschlitz Mittel zur Erzeugung einer Strömungskomponente in Umfangsrichtung vorgesehen sind.

12. Strömungsarbeitsmaschine nach einem der Ansprüche 1 bis 11, **dadurch gekennzeichnet, dass** am Schlitzaustritt ein Drallerzeuger angeordnet ist.

**Claims**

1. Fluid-flow machine with at least one rotor (6), which includes several rotor blades (8) attached to a rotating shaft and with a casing (1) which forms an annulus and is passed by a fluid flowing through the rotor (6),

   - with means for the supply of fluid to at least one blade (8) of a blade row of the rotor (6) being provided on aerodynamically critical locations on trailing edge and rim-near surfaces (HRO),
   - with a configuration of N slots (N ≥ 1) being provided in the casing (1) outside of the bladed area of a blade row with free blade ends at the flank of an annulus setback,
   - with the annulus setback starting at max. 35 % of the meridional chord length measured at the blade tip upstream of the blade leading edge and ending downstream of the leading edge,
   - with a depth of the annulus setback continuously decreasing towards its end from an initially maximum amount, forming a flank, and the setback, at the end, passing into the conventional smooth annulus contour,
   - with the end of the setback being arranged in the area of the blade, thereby generating a bent in the meridional course of the blade tip and the radial gap,
   - with the annulus setback at the flank being provided with at least one slot, through which fluid can be supplied.

2. Fluid-flow machine in accordance with Claim 1, **characterized in that** the depth (t) of the annulus setback is at least 0.3 mm and does not exceed 20 % of the meridional blade tip chord length.

3. Fluid-flow machine in accordance with Claim 1 or 2, **characterized in that** the flank of the setback includes an angle between ≤ -30° and ≤ 60° with the normal to the annulus wall at the starting point (A) of the annulus setback.

4. Fluid-flow machine in accordance with one of the Claims 1 to 3, **characterized in that** an annular slot for fluid supply is provided at the flank.

5. Fluid-flow machine in accordance with Claim 4, **characterized in that** the flow direction of the annular slot is inclined to the tangent on the annulus contour at the starting point A by an angle between ≤ -45° and ≤ 45°.

6. Fluid-flow machine in accordance with one of the Claims 1 to 3, **characterized in that** the slot is designed as a curvilinear slot.

7. Fluid-flow machine in accordance with one of the Claims 1 to 3, **characterized in that** the slot is designed as a series of short slots.

8. Fluid-flow machine in accordance with one of the Claims 1 to 3, **characterized in that** the slot is interrupted to produce a row of short slots.

9. Fluid-flow machine in accordance with one of the Claims 1 to 8, **characterized in that** a distance (S1) between the slot and a contour length (L1) of the annulus setback adjoining the flank is less than 3 radial gap widths (w) of a radial gap formed between the free blade end and the casing radially adjoining the free blade end.

10. Fluid-flow machine in accordance with one of the Claims 1 to 9, **characterized in that** in at least one annular gap means are provided for structural stiffening.

11. Fluid-flow machine in accordance with one of the Claims 1 to 10, **characterized in that** in at least one annular gap means are provided for generating a flow component in the circumferential direction.

12. Fluid-flow machine in accordance with one of the Claims 1 to 11, **characterized in that** a swirler is arranged at the exit of the slot.

**Revendications**

1. Turbomachine avec au moins un rotor (6) qui comprend plusieurs aubes de rotor (8) fixées sur un arbre rotatif, ainsi qu'un carter (1) formant un canal annulaire qui est traversé par un fluide lors de l'écoulement dans le rotor (6),

   - sachant que des moyens pour amener du fluide à au moins une aube (8) d'une rangée d'aubes du rotor (6) sont prévus à des endroits aérodynamiquement critiques sur des surfaces du bord de fuite et proches du bord (HRO),

- sachant que dans le carter (1), hors de la zone aubagée d'une rangée d'aubes avec extrémités d'aube libres, est formée une configuration de N fentes (N ≥ 1) sur le flanc d'un redent du canal annulaire,

- sachant que le redent du canal annulaire commence en amont du bord d'attaque de l'aube à 35 % au maximum de la longueur de corde méridienne mesurée sur le bout d'aube et se termine en aval du bord d'attaque,

- sachant qu'une profondeur du redent du canal annulaire diminue continuellement d'une valeur maximale initiale, formant un flanc, jusqu'à son extrémité, et qu'à son extrémité, le redent se fond dans le contour de canal annulaire conventionnel, lisse,

- sachant que l'extrémité du redent est située dans la zone de l'aube en engendrant une inflexion dans le profil méridien du bout d'aube et de l'interstice radial,

- sachant que le redent du canal annulaire est muni sur le flanc d'au moins une fente à travers laquelle du fluide peut être amené.

2. Turbomachine selon la revendication n° 1, **caractérisée en ce que** la profondeur (t) du redent du canal annulaire est au moins égale à 0,3 mm et ne dépasse pas 20 % de la longueur de corde méridienne du bout d'aube.

3. Turbomachine selon la revendication n° 1 ou n° 2, **caractérisée en ce qu'**au point initial (A) du redent du canal annulaire, le flanc du redent inclut un angle compris entre inférieur ou égal à -30° et inférieur ou égal à 60° avec la normale à la paroi du canal annulaire.

4. Turbomachine selon une des revendications n° 1 à n° 3, **caractérisée en ce qu'**une fente annulaire pour amener le fluide est formée sur le flanc.

5. Turbomachine selon la revendication n° 4, **caractérisée en ce que** la direction d'écoulement de la fente annulaire est inclinée selon un angle compris entre inférieur ou égal à -45° et inférieur ou égal à 45° par rapport à la tangente sur le contour du canal annulaire au point initial A.

6. Turbomachine selon une des revendications n° 1 à n° 3, **caractérisée en ce que** la fente est conçue comme fente curviligne.

7. Turbomachine selon une des revendications n° 1 à n° 3, **caractérisée en ce que** la fente est conçue comme une rangée de courtes fentes.

8. Turbomachine selon une des revendications n° 1 à n° 3, **caractérisée en ce que** la fente est conçue de manière interrompue pour former une rangée de courtes fentes.

9. Turbomachine selon une des revendications n° 1 à n° 8, **caractérisée en ce qu'**une distance (S1) entre la fente et une section (L1) du contour du redent du canal annulaire contiguë au flanc est inférieure à 3 largeurs radiales (w) d'interstice d'un interstice radial formé entre l'extrémité libre de l'aube et le carter la jouxtant dans le sens radial.

10. Turbomachine selon une des revendications n° 1 à n° 9, **caractérisée en ce que** sont prévus des moyens de renforcement structurel dans au moins une fente annulaire.

11. Turbomachine selon une des revendications n° 1 à n° 10, **caractérisée en ce que** sont prévus des moyens pour générer une composante d'écoulement dans le sens circonférentiel dans au moins une fente annulaire.

12. Turbomachine selon une des revendications n° 1 à n° 11, **caractérisée en ce qu'**un générateur de tourbillons est placé à la sortie de la fente.

Fig.1

EP 1 536 147 B1

EP 1 536 147 B1

HRO

SIFZ

Rotor

9

Stator

Rotor

8

9

Stator

6

7

6

7

Fig.2

Fig.3

Gehäuse ⌐ 1

Ring - kanal

10 ⌐

Rotor - trommel (Nabe)

11    13

Vor- leit- rad

Rotor n

Stator n

Rotor n+1

Stator n+1

r

x

Maschinenachse

**Fig.4A**

Gehäuse ⌐ 1

Ring- kanal

10 ⌐

Rotor- Trommel 1 (Nabe)

13

Rotor n

Rotor n+1

Stator n+1

r

x

Maschinenachse

Rotor- Trommel 2 (Nabe)

**Fig.4B**

Gehäuse

1

Ringkanal

Rotor
(n)

Stator
(n)
aussen

Gehäuse

10

Stator
(n)
innen

Rotor
(n+1)

Stator
(n+1)

Rotortrommel
(Nabe)

r

x

Maschinenachse

13

**Fig.4C**

Gehäuse

1

Ringkanal

Rotor
(n)

Rotor
(n+1)

Stator
(n+1)

Rotor-
Trommel 2
(Nabe)

10

S
(n)

R
(n+1)

S
(n+1)

Gehäuse

Rotor-
Trommel 1
(Nabe)

r

x

Maschinenachse

13

**Fig.4D**

Fig.5

Fig.6

Fig.7

Stator

Rotor

Gehäuse

Ring-kanal

Nabe

Typ C

Typ D

Typ E

Typ D

Typ E

Typ C

$C_m$

$C_m$

$0,35\ C_m$

$0,25\ C_m$

Maschinenachse

Hinterkanten- und Randnahe Oberflächen HRO (Typen C, D, E)

**a.** Rotor mit Außendeckband

HRO, Typ C

HRO, Typ C

**b.** Rotor mit Laufspalt und freien Blattspitzen

HRO, Typ D

HRO, Typ E

HRO, Typ C

**c.** Stator mit Innendeckband

HRO, Typ C

HRO, Typ C

**d.** Stator mit Laufspalt (innen) und freien Schaufelspitzen

HRO, Typ C

HRO, Typ E

HRO, Typ D

**e.** Stator mit Standspalt (innen) und freien Schaufelspitzen

HRO, Typ C

HRO, Typ E

HRO, Typ D

**f.** Stator mit Standspalt (außen) und freien Schaufelspitzen

HRO, Typ D

HRO, Typ E

HRO, Typ C

**g.** Stator mit zweifacher Befestigung

HRO, Typ C

HRO, Typ C

——— Ruhendes Bauteil          ············· Rotierendes Bauteil

# Fig.8

EP 1 536 147 B1

EP 1 536 147 B1

Individuelle Fluidzufuhr
(Drosselorgan optional)

Ⓧ Drosselorgan

12

Stator

7

Gehäuse

1

ZK

ZK

ZK

ZK

SK

SK

SK

SK

SK

SK

SK

NK

Ringkanal
(= Hauptströmungspfad)

10

NK

NK

NK

Nabe

Rotor

11

13

x

Maschinenachse

12

Fig.9

Fig.10

Stator

Individuelle Fluidzufuhr
(Drosselorgan optional)

Gehäuse

Ringkanal
(= Hauptströmungspfad)

Nabe

SK
NK
ZK
Rotor

Maschinenachse

Drosselorgan

x

Fig.11

⊗ Drosselorgan

Stator

Gehäuse

Ringkanal
(= Hauptströmungspfad)

GK

GK

GK

GK

SK

SK

SK

SK

SK

SK

ZK

ZK

ZK

ZK

Nabe

Rotor

Maschinenachse

Individuelle Fluidzufuhr
(Drosselorgan optional)

r

x

Fig.12

Stator

GK

GK

SK

SK

SK

ZK

ZK

ZK

SK

SK

SK

ZK

ZK

Rotor

Individuelle Fluidzufuhr
(Drosselorgan optional)

Fig.13

x

r

⊗ Drosselorgan

Gehäuse

Ringkanal
(= Hauptströmungspfad)

Nabe

Maschinenachse

Fig.14

Fluidzufuhrvorrichtung an HRO Typ A, (Darstellung Teil 1)

$$0,7 *C_{mA} < c_A < C_{mA} \qquad 0,25*H_A < h_A < 0,75*H_A$$

$$0,7 *C_{mE} < c_E < C_{mE} \qquad 0,25*H_E < h_E < 0,75*H_E$$

$$W < 0,05*C_m$$

Fig.15

Fluidzufuhrvorrichtung an HRO Typ A, (Darstellung Teil 2)

70% C$_m$
Grenze

Saugseite

A

A

HK

VK

70% C$_m$
Grenze

Saugseite

A

A

HK

VK

Schnitt A-A

Saugseite

Druckseite

mindestens
eine SK

Schnitt A-A

Saugseite

Druckseite

mindestens
eine SK

Fig.16

Fluidzufuhrvorrichtung an HRO Typ A, (Darstellung Teil 3)

A

A

70% $C_m$ Grenze

Saug-seite

HK

VK

Schnitt A-A

Saugseite

Druckseite

mindestens eine SK

A

A

70% $C_m$ Grenze

Saug-seite

HK

VK

Schnitt A-A

Saugseite

Druckseite

mindestens eine SK

Fig.17

# Fluidzufuhrvorrichtungan HRO Typ A, (Darstellung Teil 4)

Saugseite

70% Cm
Grenze

A — · — A

VK

HK

Saugseite

70% Cm
Grenze

A — · — A

VK

HK

Schnitt A-A

Saugseite

Druckseite

mindestens
eine SK

Schnitt A-A

Saugseite

Druckseite

mindestens
eine SK

## Fig.18

EP 1 536 147 B1

# Fluidzufuhrvorrichtung an HRO Typ A, (Darstellung Teil 5)

Oberflächenbündige
Konfiguration der
Fluidzufuhrvorrichtung

Fluidzufuhrvorrichtung
in Flachdüsen-
Konfiguration

0° – 30°

mindestens
eine SK

Saugseite

Druckseite

Saugseite

Druckseite

x

y

C

Bereich überhöhter,
konkaver Krümmung

## Fig.19

EP 1 536 147 B1

# Fluidzufuhrvorrichtung an HRO Typ B, (Darstellung Teil 1)

$$0 < h_A < 0{,}25{*}H_A \quad \text{und} \quad 0 < h_E < 0{,}25{*}H_E$$

oder

$$0{,}75{*}H_A < h_A < H_A \quad \text{und} \quad 0{,}75{*}H_E < h_E < H_E$$

$$W < 0{,}05{*}C_m$$

## Fig.20

EP 1 536 147 B1

# Fluidzufuhrvorrichtung an HRO Typ B, (Darstellung Teil 2)

A

Grenze h/H=0,75

Saugseite

HK

VK

A

Grenze h/H=0,75

Saugseite

Grenze h/H=0,25

HK

VK

Schnitt A - A

Saugseite

Druckseite

mindestens
eine SK

Schnitt A - A

Saugseite

Druckseite

mindestens
eine SK

## Fig.21

EP 1 536 147 B1

# Fluidzufuhrvorrichtung an HRO Typ B, (Darstellung Teil 3)

Loch- oder Schlitzkonfiguration

Flachdüsenkonfiguration

Austrittslängsachse

Austrittslängsachse

A

A

Stator

Rotor

r

u

x

**Schnitt A - A**

+60°
-60°

u

m

Zielrichtung der Fluidzufuhrvorrichtung

## Fig.22

EP 1 536 147 B1

Fluidzufuhrvorrichtung an HRO Typ C, (Darstellung Teil 1)

Fig.23

EP 1 536 147 B1

Fig.24

EP 1 536 147 B1

## Fluidzufuhrvorrichtung an HRO Typ C, (Darstellung Teil 3)
### beispielhaft für den Fall N = 3 (3 Schlitze oder Ersatzelemente)

EP 1 536 147 B1

**Schnitt A - A**

Schaufelende
mit fester
Anbindung an
Ringkanalwandung

u

m

mindestens eine
ZK bzw. GK bzw. NK

## Fig.25

**Fig.26** Fluidzufuhrvorrichtung an HRO Typ C, (Darstellung Teil 4)
beispielhaft für den Fall N = 3 (3 Schlitze oder Ersatzelemente)

Lochformation

Schlitzformation

W

W

Flachdüse

Meridianschnitt A-A
durch Flachdüse:

0° – 30°

Fig.26

EP 1 536 147 B1

**Fig.27**

**Fluidzufuhrvorrichtung an HRO Typ D**
**(Darstellung Teil 1a)**
Umfangsgerichtete Schlitzanordnung,
beispielhaft für den Fall N = 3

Ansicht M - M

Ansicht G - G

mindestens eine ZK

Wand

M

E

A

$\gamma$

$C_m$

e

a

U

V

$\alpha$

b

d

m

a

e

$C_m$

Freies
Schaufelende

r

u

x

$\Sigma V / \Sigma U <= 50$

m

-0,35*C_m <= a <= 0,55*C_m

a < e <= 0,6 * C_m

$0 < b < 0,03 * C_m$

$0 < d < e\text{-}a\text{-}(N*b)$

$0° < \alpha < 100°$

$-60° < \gamma < 60°$

EP 1 536 147 B1

**Fig.28**

## Fluidzufuhrvorrichtungan HRO Typ D, (Darstellung Teil 1b)
### SchwingformSchlitzanordnung, beispielhaft für den Fall N = 2

mindestens eine ZK

**E** Wand

$R_E$

A

α

**m**

b

d

a

e

$C_m$

Freies Schaufel-ende

r

u

X

$-0,35 {}^* C_m <= a <= 0,55 {}^* C_m$

$a < e <= 0,6 {}^* C_m$

$0 < b < 0,03 {}^* C_m$
$0 < d < e\text{-}a\text{-}(N{}^*b)$
$0° < α < 100°$
$(-60° < γ < 60°)$

## Ansicht G - G

u

m

$C_m$

e

a

S

F

$0,2{}^*S < F <= 2{}^*π{}^*R_E$

EP 1 536 147 B1

## Fig.29  Fluidzufuhrvorrichtung an HRO Typ D, (Darstellung Teil 1c)
### Gestaffelte Schlitzanordnung

$-0,35*C_m <= a <= 0,55*C_m$

$a < e <= 0,6 * C_m$

$0 < b < 0,03 * C_m$

$30° < \alpha < 150°$

$0,2*S < K <= 2*\pi*R_E$

$0° < \alpha < 100°$

$30° < \beta < 90°$

$(-60° < \gamma < 60°)$

EP 1 536 147 B1

# Fluidzufuhrvorrichtung an HRO Typ D, (Darstellung Teil 1d)
## Schlitzersatz durch Lochreihen

Ansicht G - G

u

m

## Fig.30

EP 1 536 147 B1

Fig.31

**Fig.32**

mindestens eine ZK

R

Freies
Schaufelende

Z

r

u

x

Z

R

Optional:
Strukturelle
Versteifung
oder
Drallerzeuger

+60°
−60°

u

m

**Schnitt**
**Z - Z:**

**Ansicht**
**R - R:**

EP 1 536 147 B1

# Fig.33

## Fluidzufuhrvorrichtung an HRO Typ D, (Darstellung Teil 2c)
### Konfiguration mit Ringkanalrücksprung und Fluidzufuhr durch Ringschlitze oder Ersatzelemente

### Ansicht
### R - R:

Konfiguration mit
1 Schwingformschlitz
und 1 Ringschlitzen

Konfiguration mit
1 Ringschlitz und
1 Reihe aus
Kurzschlitzen mit kleinem
Höhen-Breiten-Verhältnis

Einzelreihe aus
Kurzschlitzen mit großem
Höhen-Breiten-Verhältnis

$\Sigma V / \Sigma U <= 100$

EP 1 536 147 B1

Fluidzufuhrvorrichtungan HRO Typ D, (Darstellung Teil 2d)
Konfiguration mit Ringkanalrücksprung und Fluidzufuhr durch Ringschlitze oder Ersatzelemente

Fig.34

mindestens eine ZK

Freies Schaufelende

R

R

Z

Z

x
r
u

Ansicht R - R:

Schnitt Z - Z:

+60°
−60°

$\varphi$

m
u

# Fig.35 Fluidzufuhrvorrichtung an HRO Typ E, (Darstellung Teil 1a)

Beispielhaft für einen Einzelschlitz (N=1)

$$0 < W < D\text{-}b$$
$$0 <= e <= 0,3 * C$$
$$e <= g <= 0,8 * C$$
$$0° < \mu <= 165°$$

$$0,1\,mm <= a <= D$$
$$0,1\,mm <= b <= D$$
$$0 <= c <= 0,1 * C$$
$$0° <= \phi <= 75°$$

S c h n i t t   Z - Z

Ringkanalwand

EP 1 536 147 B1

**Fig.36** Fluidzufuhrvorrichtung an HRO Typ E, (Darstellung Teil 1b)

<u>Beispielhaft für einen Einzelschlitz (N=1)</u>

$$0° <= \gamma <= 120°$$

Schnitt P - P

EP 1 536 147 B1

# Fig.37

## Fluidzufuhrvorrichtung an HRO Typ E, (Darstellung Teil 1c)
### Beispielhaft für eine Doppelschlitzanordnung (N=2) oder Schlitzersatz durch Kurzschlitzreihe

Schnitt Z-Z

Ringkanalwand

EP 1 536 147 B1

**Fig.38**

Fluidzufuhrvorrichtung an HRO Typ E, (Darstellung Teil 1d)
<u>Schlitzersatz durch Lochreihen (Beispielhaft für N=1, N=2)</u>

SS

Z

DS

E

A

W

DS                    SS

<u>**Schnitt Z-Z**</u>

Ringkanalwand

SS

Z

DS

E

A

W

DS                    SS

<u>**Schnitt Z-Z**</u>

Ringkanalwand

EP 1 536 147 B1

## Fig.39 Fluidzufuhrvorrichtungan HRO Typ E, (Darstellung Teil 2a)
### Beispielhaft für eine 2 Rundöffnungen (N=2)

**Ansicht Z - Z**

**Ansicht P - P**

$0 < W < D\text{-}b$

$0 <= e <= 0.3 * C$

$e <= g <= 0.8 * C$

$30° < \mu < 150°$

$0 < s <= 0.5 * C$

$0.1\ mm <= a <= D$

$0.1\ mm <= b <= D$

$0 <= c <= 0.1 * C$

$0° <= \varphi <= 135°$

EP 1 536 147 B1

**Fig.40**

Fluidzufuhrvorrichtung an HRO Typ E, (Darstellung Teil 2b)
<u>Rundöffnungsersatz durch Schlitze, Schlitzreihen oder Lochreihen</u>

<u>Ansicht Z - Z</u>

Kurzschlitzreihe                    Langschlitz                    Lochreihe

EP 1 536 147 B1

Fig.41     Definition „Saugseitige Intensitätsvariable Fluidzufuhr (SIFZ)"

Gehäuse

Mittlere MSL

Meridianstromlinien (MSL)

Schaufel

Ringkanalmittelorthogonalen

Nabe

r

x

EP 1 536 147 B1

**Fig.42**          Definition "Saugseitige Intensitätsvariable Fluidzufuhr (SIFZ)"

Gehäuse

Saugseite

MSL mit maximaler
Erstreckung innerhalb der
Vorrichtungseinhüllenden

$S_{x+1}$

$\delta$

$S_x$

$S_{x-1}$

r

x

Vorrichtungseinhüllende (VE)

Rotor- oder Statorschaufel

Nabe

EP 1 536 147 B1

# Fig.43

Ausführungsbeispiele für Vorrichtungen zur „SIFZ"

(a.)

(b.)

(c.)

(d.)

(e.)

(f.)

EP 1 536 147 B1

# Fig.44

Individuelle Fluidzufuhr/- abfuhr
(Drosselorgan optional)

⊗ Drosselorgan

Stator

Gehäuse

Ringkanal
(= Hauptströmungspfad)

Nabe

Rotor

Maschinenachse

EP 1 536 147 B1

# Fig.45

Individuelle Fluidzufuhr /-abfuhr
(Drosselorgan optional)

AK

ZK

AK

ZK

ZK

**Stator**

**Gehäuse**

SK

SK

SK

SK

1

SK

SK

Ringkanal
(= Hauptströmungspfad)

SK

SK

10

NK

11 → **Nabe**

NK

Rotor

r

Maschinenachse

x

⊗ **Drosselorgan**

13

6

7

EP 1 536 147 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5690473 A
- US 6334753 B
- US 2870957 A
- US 2933238 A
- US 5480284 A
- GB 792343 A
- EP 1118747 A
- GB 1163328 A
- DE 1428188 A1
- EP 1382855 A
- GB 479427 A
- EP 0754864 A
- DE 2458709 A1
- GB 2058222 A
- JP 06207558 A
- GB 1043168 A
- DE 19523339 A1
- DE 4438184 C1